(19) Europäisches Patentamt
European Patent Office
Office européen des brevets

(11) EP 4 759 560 A1

(12) EUROPEAN PATENT APPLICATION

(43) Date of publication:
**17.06.2026 Bulletin 2026/25**

(21) Application number: **25217335.6**

(22) Date of filing: **20.11.2025**

(51) International Patent Classification (IPC):
***B60C 1/00*** (2006.01) ***B60C 11/00*** (2006.01)
***B60C 11/12*** (2006.01) ***C08C 19/25*** (2006.01)
***C08L 7/00*** (2006.01) ***B60C 11/03*** (2006.01)

(52) Cooperative Patent Classification (CPC):
(C-Sets available)
**B60C 11/005; B60C 1/0016; B60C 11/1259; B60C 11/1281;** B60C 1/00; B60C 11/0306; B60C 11/1218; B60C 2011/0025; B60C 2011/0033; B60C 2011/0341; B60C 2011/1213 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.12.2024 JP 2024218188**

(71) Applicant: **Sumitomo Rubber Industries, Ltd.**
**Kobe-shi, Hyogo 651-0072 (JP)**

(72) Inventors:
- **KAGIMOTO, Shuji**
  **Kobe-shi, 651-0072 (JP)**
- **KASAI, Yuki**
  **Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) A tread 4 of a tire 2 includes a base layer 30 containing a filler including carbon black and silica. A ratio Sr of a content BSi of the silica to a total of a content BCB of the carbon black and the content BSi of the silica is greater than 0.20. The tread 4 includes land portions 12 separated by a circumferential main groove 10. A ratio Ur of a thickness TU of the base layer 30 to a depth DGm of the circumferential main groove 10 is 0.20 or more and 0.60 or less. At least one of the land portions 12 includes a sipe 26 having a bottom 26T within the base layer 30. The ratio Sr, the thickness TU of the base layer 30, and a depth DU of the sipe 26 in the base layer 30 satisfy a relational expression: $Sr \times DU/TU \geq 0.010$.

EP 4 759 560 A1

(52) Cooperative Patent Classification (CPC): (Cont.)

C-Sets
**C08L 7/00, C08L 91/08, C08L 45/00, C08K 3/04, C08K 3/36, C08K 5/548, C08K 5/18, C08K 5/09, C08K 3/22, C08K 3/06, C08K 5/47**

## Description

### BACKGROUND OF THE INVENTION

#### Field of the Invention

The present invention relates to a tire.

#### Background Art

A technique for forming a tread with two layers, a cap layer and a base layer located inward of the cap layer, is known.

Japanese Laid-Open Patent Publication No. 2003-127614 discloses forming a cap layer from a crosslinked rubber that is softer than a crosslinked rubber for a base layer, in order to improve grip performance on a wet road surface (hereinafter referred to as wet performance).

A tread comes into contact with a road surface. Accordingly, the tread becomes worn. In a two-layer tread, a base layer becomes exposed when a cap layer disappears due to wear.

An object of the present invention is to provide a tire that can exhibit good wet performance even in a state where a base layer is exposed.

### SUMMARY OF THE INVENTION

A tire according to the present invention includes a tread located on a radially outermost side and extending in a circumferential direction. The tread includes a cap layer and a base layer located radially inward of the cap layer. The base layer is formed from a rubber composition containing a rubber component and a filler. The filler includes carbon black and silica. A ratio Sr of a content BSi of the silica per 100 parts by mass of the rubber component to a total of a content BCB of the carbon black per 100 parts by mass of the rubber component and the content BSi of the silica is greater than 0.20. The tread includes a plurality of land portions separated by a circumferential main groove. A ratio Ur of a thickness TU of the base layer to a depth DGm of the circumferential main groove is 0.20 or more and 0.60 or less. At least one of the land portions includes a sipe having a bottom within the base layer. The ratio Sr, the thickness TU of the base layer, and a depth DU of the sipe in the base layer satisfy the following relational expression.

$$Sr \times DU/TU \geq 0.010$$

The present invention can provide a tire that can exhibit good wet performance even in a state where a base layer is exposed.

### BRIEF DESCRIPTION OF THE DRAWINGS

FIG. 1 is a development view showing a part of a tread of a tire according to one embodiment of the present invention;

FIG. 2 is a cross-sectional view taken along a line II-II in FIG. 1;

FIG. 3 is a cross-sectional view taken along a line III-III in FIG. 1;

FIG. 4 is a development view showing a modification of a sipe;

FIG. 5 is a cross-sectional view taken along a line V-V in FIG. 4;

FIG. 6 is a cross-sectional view showing another modification of the sipe;

FIG. 7 is a cross-sectional view illustrating the positional relationship of a boundary PB between a sipe body and a tubular portion with respect to a boundary between a cap layer and a base layer;

FIG. 8 is a cross-sectional view illustrating the positional relationship of the boundary PB between the sipe body and the tubular portion with respect to the boundary between the cap layer and the base layer; and

FIG. 9 is a cross-sectional view showing still another modification of the sipe.

DETAILED DESCRIPTION

Hereinafter, the present invention will be described in detail based on preferred embodiments with appropriate reference to the drawings.

The tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a crosslinked rubber is a crosslinked product, of a rubber composition, which is obtained by pressurizing and heating the rubber composition. The rubber composition is a material obtained by mixing a rubber component and chemicals such as a filler in a kneading machine such as a Banbury mixer.

In the present invention, a loss tangent (tan $\delta$) and a complex elastic modulus of a component formed from a crosslinked rubber, of the components included in the tire, is measured in accordance with the standards of JIS K6394 using a viscoelasticity spectrometer. The measurement conditions are as follows.

Initial strain = 10%
Dynamic strain = $\pm$1%
Frequency = 10 Hz
Mode = tensile mode
Temperature = 0°C or 70°C

In this measurement, a test piece (a length of 40 mm $\times$ a width of 4 mm $\times$ a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the "loss tangent" is represented as a loss tangent at 0°C, and the "complex elastic modulus" is represented as a complex elastic modulus at 70°C.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

The tread portion includes a tread as a component of the tire. Each sidewall portion includes a sidewall as a component of the tire. Each bead portion includes a bead as a component of the tire.

[Findings on Which Present Invention Is Based]

For example, sipes are formed on the tread of a studless tire (specifically, blocks formed in the tread). Each sipe functions as an edge component. The sipe can contribute to improving wet performance.

In a tire, deformation and restoration are repeated. If a cap layer is formed from a soft crosslinked rubber, the movement of a tread increases. If sipes are formed on such a tread, the risk of occurrence of damage such as chipping in the tread increases.

To reduce the risk of occurrence of damage, it is sufficient to adjust the depth of each sipe, but when the cap layer disappears, a base layer becomes exposed. The base layer is harder than the cap layer. Therefore, there is a concern that wet performance may decrease when the base layer becomes exposed.

Therefore, the present inventors have conducted a thorough study for a technology that allows a tire to exhibit good wet performance even in a state where a base layer is exposed, and thus have completed the invention described below.

[Outline of Embodiment of Present Invention]

The present invention is directed to a tire including a tread located on a radially outermost side and extending in a circumferential direction, wherein the tread includes a cap layer and a base layer located radially inward of the cap layer, the base layer is formed from a rubber composition containing a rubber component and a filler, the filler includes carbon black and silica, a ratio Sr of a content BSi of the silica per 100 parts by mass of the rubber component to a total of a content BCB of the carbon black per 100 parts by mass of the rubber component and the content BSi of the silica is greater than 0.20, the tread includes a plurality of land portions separated by a circumferential main groove, a ratio Ur of a thickness TU of the base layer to a depth DGm of the circumferential main groove is 0.20 or more and 0.60 or less, at least one of the land portions includes a sipe having a bottom within the base layer, and the ratio Sr, the thickness TU of the base layer, and a depth DU of the sipe in the base layer satisfy the following relational expression,

$$Sr \times DU/TU \geq 0.010.$$

The tire of the present invention can exhibit good wet performance even in a state where the base layer is exposed. The mechanism by which the tire achieves this effect has not been clarified but is inferred as follows.

The sipe is formed on the land portion such that the bottom thereof is located within the base layer. Even when the cap layer disappears and the base layer becomes exposed, the sipe can contribute to exhibiting wet performance.

Since the base layer for which the content BSi of the silica is adjusted in consideration of the content BCB of the carbon black is used, the base layer itself can contribute to exhibiting wet performance.

Furthermore, since the thickness TU of the base layer is adjusted based on the depth DGm of the circumferential main groove, occurrence of damage due to the presence of the sipe is effectively suppressed. Since the base layer becomes exposed at an effective timing, a decrease in wet performance is suppressed.

Since the depth DU of the sipe in the base layer and the content BSi of the silica are adjusted in a well-balanced manner, the tire can effectively increase the contribution of the sipe and the contribution of the base layer to wet performance after the base layer becomes exposed while suppressing occurrence of damage due to the presence of the sipe.

The tire can exhibit good wet performance even in a state where the base layer is exposed.

Preferably, a loss tangent LTu of the base layer at a temperature of 0°C, the thickness TU of the base layer, and the depth DU of the sipe in the base layer satisfy the following relational expression,

$$LTu \times DU/TU \geq 0.0090.$$

Accordingly, the tire can effectively increase the contribution of the sipe and the contribution of the base layer to wet performance.

Preferably, the sipe extends in a zigzag manner in a length direction and a depth direction thereof. Accordingly, when the land portion becomes deformed and the wall surfaces of the sipe come into close contact with each other, the wall surfaces constrain each other. The stiffness of the land portion is effectively increased. The movement of the land portion is suppressed, so that occurrence of damage due to the presence of the sipe is suppressed. The sipe and the base layer can effectively contribute to exhibiting good wet performance.

Preferably, the sipe includes a sipe body and a tubular portion located radially inward of the sipe body and having the bottom, and the tubular portion has a width wider than a width of the sipe body. Accordingly, concentration of strain on the bottom of the sipe is suppressed. Occurrence of damage due to the presence of the sipe is effectively suppressed. The

sipe and the base layer can effectively contribute to exhibiting good wet performance.

More preferably, the tubular portion has a maximum width within the base layer. Accordingly, the groove volume increases when the tubular portion appears in the exposed base layer. The drainage performance of the tire is improved. The sipe including the tubular portion can contribute to improving wet performance in a state where the base layer is exposed. A decrease in wet performance when the tread in contact with a road surface switches from the cap layer to the base layer is suppressed.

Preferably, the total of the content BCB of the carbon black per 100 parts by mass of the rubber component and the content BSi of the silica per 100 parts by mass of the rubber component is less than 40 parts by mass. Accordingly, a base layer having appropriate strength is formed. The tire can reduce the risk of occurrence of damage such as chipping in the tread. The base layer can stably exhibit its function.

Preferably, the rubber component includes a natural rubber, and a content CNR of the natural rubber in 100 parts by mass of the rubber component is 95 parts by mass or more. Accordingly, a base layer having appropriate strength is formed. The tire can reduce the risk of occurrence of damage such as chipping in the tread. The base layer can stably exhibit its function.

As described above, according to the present invention, a tire that can exhibit good wet performance even in a state where a base layer is exposed, is obtained. This will be described in detail below.

[Details of Embodiment of Present Invention]

[Tire]

FIG. 1 is a plan view illustrating a development of a part of a tread 4 of a tire 2 according to one embodiment of the present invention. The tire 2 is mounted to a vehicle such as a truck and a bus. The tire 2 is a heavy duty tire. The tire 2 is also a studless tire for which on-ice performance is taken into consideration. The tire 2 is a studless type heavy duty tire.

The present invention will be described with a heavy duty tire as an example, but the present invention can also be applied to tires for a passenger car, tires for a small truck, and tires for a motorcycle. It is preferable that the present invention is applied to heavy duty tires, and among them, it is more preferable that the present invention is applied to studless type heavy duty tires.

In FIG. 1, a direction indicated by a double-headed arrow AD is the axial direction of the tire 2. The axial direction of the tire 2 means a direction parallel to the rotation axis of the tire 2. A direction indicated by a double-headed arrow CD is the circumferential direction of the tire 2. The circumferential direction of the tire 2 is also the rotation direction of the tire 2. A direction perpendicular to the surface of the drawing sheet of FIG. 1 is the radial direction of the tire 2.

In FIG. 1, an alternate long and short dash line EL extending in the radial direction represents the equator plane of the tire 2.

In the axial direction, a direction away from the equator plane EL corresponds to the axially outer side of the tire 2, and a direction approaching the equator plane EL corresponds to the axially inner side of the tire 2.

The tire 2 includes the tread 4. The tread 4 is one of components constituting the internal structure of the tire 2. In the present invention, the internal structure of the tire 2 is not limited to any particular internal structure. Although not described in detail, the tire 2 has an internal structure that is common as the internal structure of a heavy duty tire.

The tread 4 is formed from a crosslinked rubber. The tread 4 is located on the radially outermost side of the tire 2. The tread 4 extends in the circumferential direction. The tire 2 comes into contact with a road surface at the tread 4. A surface, of the tread 4, which comes into contact with a road surface is a tread surface 6. The tread 4 has the tread surface 6 which comes into contact with a road surface.

Each solid line TE extending in the circumferential direction represents an end of the tread surface 6. In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

In FIG. 1, a length indicated by a double-headed arrow TW is the width of the tread 4. The width TW of the tread 4 is the distance in the axial direction from one end TE to another end TE of the tread surface 6. The width TW of the tread 4 is measured along the tread surface 6.

Grooves 8 are formed on the tread 4. Accordingly, a tread pattern is formed.

A tread pattern shown in FIG. 1 is an example of the tread pattern formed on the tread 4 of the tire 2 of the present invention. The tread pattern shown in FIG. 1 is the tread pattern of a new tire 2 that has not been worn.

FIG. 2 shows a cross-section of the groove 8. A direction indicated by a double-headed arrow RD is the radial direction of the tire 2. A side indicated by an arrow RD1 is the radially outer side of the tire 2, and a side indicated by an arrow RD2 is the radially inner side of the tire 2. In this specification, the cross-section of the groove 8 is represented as a cross-section along a plane perpendicular to the length direction of the groove 8.

The cross-section of the groove 8 shown in FIG. 2 is a cross-section of a circumferential main groove described later. The main configuration of the groove 8 will be described based on the cross-section of the circumferential main groove.

The groove 8 has a pair of wall surfaces 8S including an opening 8M, and a bottom surface 8B including a bottom 8T.

Unless otherwise specified, the bottom 8T is represented by a position at which the distance from a reference plane RP, which is a plane including a pair of edges 8E constituting the opening 8M, to the bottom surface 8B measured along a normal line of the reference plane RP is the largest. In the case where the bottom surface 8B is a flat surface, the bottom 8T is represented by the center position of the bottom surface 8B. In the case where a protrusion is provided on the bottom surface 8B, the bottom 8T is specified based on a virtual bottom surface obtained by assuming that no protrusion is present thereon.

A normal line, of the reference plane RP, connecting the reference plane RP and the bottom 8T is a reference normal line RN, and the direction of the reference normal line RN is the depth direction of the groove 8.

The width of the groove 8 is represented as the shortest distance (hereinafter referred to as inter-wall surface distance) between one wall surface 8S and another wall surface 8S. Unless otherwise specified, the inter-wall surface distance is measured along a line orthogonal to the reference normal line RN. When the profile of the tread surface 6 can be confirmed, the bottom 8T and the width of the groove 8 may be specified with the profile of the tread surface 6 as the reference plane RP.

In FIG. 2, a length indicated by a double-headed arrow WG is the width of the groove 8 at the opening 8M. In the case where a portion of the groove 8 at the opening 8M is processed in a tapered manner, the width at the opening 8M of the groove 8 is represented based on virtual edges obtained on the assumption that the portion of the groove 8 at the opening 8M is not processed in a tapered manner. A length indicated by a double-headed arrow DG is the depth of the groove 8. Unless otherwise specified, the depth DG of the groove 8 is represented as the distance from the reference plane RP to the bottom 8T of the groove 8 measured along the reference normal line RN. The position, the width WG, and the depth DG of the groove 8 are determined as appropriate according to the specifications of the tire 2.

The grooves 8 each having a width WG of less than 1.0 mm at the opening 8M are referred to as sipes. The grooves 8 other than sipes are referred to as ordinary grooves, and each have a groove width WG of 1.0 mm or more at the opening 8M thereof.

An ordinary groove that has a wide width and has a pair of wall surfaces that do not come into contact with each other when the tire comes into contact with a road surface is also referred to as main groove. An ordinary groove that has a narrow width and has a pair of wall surfaces that can come into contact with each other when the tire comes into contact with a road surface is also referred to as narrow groove.

The tread 4 has a circumferential main groove 10. The circumferential main groove 10 extends continuously in the circumferential direction. The circumferential main groove 10 is the main groove described above. The circumferential main groove 10 has a wide width. A pair of wall surfaces 10S of the circumferential main groove 10 do not come into contact with each other even when the tire 2 comes into contact with a road surface.

A depth DGm of the circumferential main groove 10 is, for example, 8 mm or more and 21 mm or less. From the viewpoint that the tire 2 can exhibit good wet performance, the depth DGm of the circumferential main groove 10 is preferably 13 mm or more and 18 mm or less. A width WGm of the circumferential main groove 10 is preferably 4.0% or more and 10% or less of the width TW of the tread 4.

The tread 4 has a plurality of circumferential main grooves 10. The tread 4 shown in FIG. 1 has three circumferential main grooves 10. The three circumferential main grooves 10 are aligned in the axial direction. The two circumferential main grooves 10 located on the outermost sides in the axial direction are shoulder circumferential main grooves 10s. The circumferential main groove 10 located between the two shoulder circumferential main grooves 10s is a main circumferential main groove 10m. The number of main circumferential main grooves 10m provided on the tread 4 is one. The main circumferential main groove 10m is located on the equator plane EL. The main circumferential main groove 10m is also referred to as center circumferential main groove.

The plurality of circumferential main grooves 10 demarcate a plurality of land portions 12 in the tread 4. The tread 4 includes the plurality of land portions 12 separated by the circumferential main grooves 10. On the tread 4 shown in FIG. 1, three circumferential main grooves 10 are formed, and four land portions 12 are formed therein.

The two land portions 12 located on the outermost sides in the axial direction are shoulder land portions 12s. Each shoulder land portion 12s includes the end TE of the tread surface 6. The land portions 12 located between the two shoulder land portions 12s are main land portions 12m. The tread 4 has two main land portions 12m. Each of the two main land portions 12m is located between the equator plane EL and the shoulder land portion 12s.

Each of the plurality of land portions 12 formed in the tread 4 can have a circumferential groove 14 extending continuously in the circumferential direction.

The circumferential groove 14 formed on each main land portion 12m is referred to as main circumferential groove 14m. The main circumferential groove 14m of the tire 2 is the narrow groove described above. The main

circumferential groove 14m is also referred to as circumferential narrow groove. Each main land portion 12m has the circumferential narrow groove 14m. The circumferential narrow groove 14m has a depth substantially equal to the depth of the circumferential main groove 10. The circumferential narrow groove 14m may be shallower than the circumferential main groove 10.

The circumferential groove 14 formed on each shoulder land portion 12s is referred to as shoulder circumferential groove 14s. The shoulder circumferential groove 14s of the tire 2 is the sipe described above. The shoulder circumferential groove 14s is also referred to as circumferential sipe. Each shoulder land portion 12s has the circumferential sipe 14s. The circumferential sipe 14s has a depth substantially equal to the depth of the circumferential main groove 10. The circumferential sipe 14s may be shallower than the circumferential main groove 10.

Each circumferential groove 14 demarcates two narrow land portions 16 in the land portion 12. The land portion 12 includes the two narrow land portions 16 separated by the circumferential groove 14. The tread 4 of the tire 2 includes the four land portions 12, and each land portion 12 includes the two narrow land portions 16.

In the present invention, for convenience of description, of the two narrow land portions 16 of each land portion 12, the narrow land portion 16 located on one end TE side of the tread surface 6 is referred to as first narrow land portion, and the narrow land portion 16 located on the other end TE side of the tread surface 6 is referred to as second narrow land portion.

In the tread 4 shown in FIG. 1, the end TE of the tread surface 6 located on the left side of the drawing sheet is referred to as first end TE1, and the narrow land portion 16 located on the first end TE1 side is referred to as first narrow land portion. The end TE of the tread surface 6 located on the right side is also referred to as second end TE2, and the narrow land portion 16 located on the second end TE2 side is referred to as second narrow land portion. The end TE of the tread surface 6 located on the right side of the drawing sheet may be referred to as first end TE1, and the narrow land portion 16 located on the first end TE1 side may be referred to as first narrow land portion. The end TE of the tread surface 6 located on the left side of the drawing sheet may also be referred to as second end TE2, and the narrow land portion 16 located on the second end TE2 side may be referred to as second narrow land portion.

Each narrow land portion 16 can have a plurality of lateral grooves 18. The plurality of lateral grooves 18 are arranged at predetermined intervals in the circumferential direction. In the tire 2, in each land portion 12, the plurality of lateral grooves 18 of the first narrow land portion 16 and the plurality of lateral grooves 18 of the second narrow land portion 16 are arranged alternately in the circumferential direction.

Each lateral groove 18 traverses the narrow land portion 16. Of the two narrow land portions 16 formed in each shoulder land portion 12s, the lateral grooves 18 of the narrow land portion 16 located on each end TE side of the tread surface 6 extend between the end TE of the tread surface 6 and the circumferential groove 14. The other lateral grooves 18 each extend between the circumferential main groove 10 and the circumferential groove 14.

By forming the plurality of lateral grooves 18 on each narrow land portion 16, a plurality of blocks 20 aligned in the circumferential direction are formed. In the tire 2, the two narrow land portions 16 of each land portion 12 each include a plurality of blocks 20. The plurality of blocks 20 formed in the first narrow land portion 16 and the plurality of blocks 20 formed in the second narrow land portion 16 are arranged alternately in the circumferential direction.

The plurality of blocks 20 formed in the narrow land portion 16 can each have a lateral sipe 22. The lateral sipe 22 is the sipe described above. In the tread 4 shown in FIG. 1, a plurality of lateral sipes 22 are formed on each block 20. The plurality of lateral sipes 22 are aligned in the circumferential direction. Each lateral sipe 22 traverses the block 20. Each block 20 of the tire 2 includes a plurality of small blocks 24 separated by the lateral sipes 22.

Of the two narrow land portions 16 formed in each shoulder land portion 12s, the lateral sipes 22 formed on the blocks 20 of the narrow land portion 16 located on the end TE side of the tread surface 6 extend between the end TE of the tread surface 6 and the circumferential groove 14. The other lateral sipes 22 each extend between the circumferential main groove 10 and the circumferential groove 14.

In the tire 2, each block 20 forms a part of the narrow land portion 16, and each narrow land portion 16 forms a part of the land portion 12. As described above, each block 20 has the lateral sipes 22. Each land portion 12 has the lateral sipes 22. Each shoulder land portion 12s as the land portion 12 further has the circumferential sipe 14s. In this specification, the lateral sipes 22 and the circumferential sipes 14s are also referred to simply as sipes 26, and each land portion 12 of the tire 2 has sipes 26.

How to form the sipes 26 on each land portion 12 is determined as appropriate according to the specifications of the tire 2. In the case where the tire 2 is a studless type heavy duty tire, it is preferable that the sipes 26 (specifically, the lateral sipes 22) are formed on the blocks 20 formed in the land portions 12 as shown in FIG. 1, in other words, the blocks 20 have the lateral sipes 22.

In the tread 4 shown in FIG. 1, all land portions 12 constituting the tread 4 have sipes 26. In the tire 2, it is sufficient that at least one land portion 12 out of the plurality of land portions 12 constituting the tread 4 has sipes 26. The land portion 12 on which the sipes 26 are provided is determined as appropriate according to the specifications of the tire 2.

FIG. 3 shows a cross-section of the lateral sipe 22, that is, the sipe 26. The sipe 26 shown in FIG. 3 extends from an opening 26M toward a bottom 26T, that is, extends straight in the depth direction thereof. As shown in FIG. 1, the sipe 26

also extends straight in the length direction thereof. The sipe 26 is a two-dimensional sipe that extends straight in the length direction and the depth direction thereof.

The tread 4 of the tire 2 includes a cap layer 28 and a base layer 30. The cap layer 28 has the tread surface 6 described above. The base layer 30 is located radially inward of the cap layer 28. The cap layer 28 is stacked on the base layer 30. When the cap layer 28 disappears due to wear, the base layer 30 becomes exposed.

The cap layer 28 is softer than the base layer 30. Specifically, the ratio of the complex elastic modulus of the cap layer 28 at a temperature of 70°C to the complex elastic modulus of the base layer 30 at a temperature of 70°C is 0.40 or more and 0.90 or less.

The tread 4 of the tire 2 is composed of two layers, the cap layer 28 and the base layer 30. The inner surface of the cap layer 28 and the outer surface of the base layer 30 form a boundary 32 between the cap layer 28 and the base layer 30 in the tread 4. The boundary 32 normally forms a flat surface inside each land portion 12 (specifically, each block 20).

In FIG. 2, a solid line TBL is a thickness reference line. The thickness reference line TBL is a line drawn such that a distance from the tread surface 6 measured along a normal line of the tread surface 6 matches the groove depth DGm of the circumferential main groove 10. A double-headed arrow TU indicates the thickness of the base layer 30. The thickness TU is represented as the maximum length from a bottom 10T of the circumferential main groove 10 to the outer surface of the base layer 30. More specifically, the thickness TU is represented as the maximum length from the thickness reference line TBL to the outer surface of the base layer 30 (in other words, the boundary 32 between the cap layer 28 and the base layer 30) measured along a normal line of the tread surface 6. In the land portion 12 located between two circumferential main grooves 10, when the two circumferential main grooves 10 have different depths, the thickness reference line TBL described above is specified using the depth DGm of the deeper circumferential main groove 10.

As described above, the tread 4 is formed from a crosslinked rubber. Although not described in detail, the cap layer 28 of the tread 4 is formed from a crosslinked rubber that is common as a crosslinked rubber for a cap layer of a tire. The cap layer 28 is softer than the base layer 30. The base layer 30 is formed using a rubber composition described later. The crosslinked rubber forming the base layer 30 is a crosslinked product of the rubber composition described later.

[Rubber Composition]

The base layer 30 is formed from a rubber composition described below. The base layer 30 is a crosslinked product of the rubber composition described below, that is, a crosslinked rubber. The rubber composition contains a rubber component and a filler.

[Rubber Component]

The rubber component is not particularly limited, and a crosslinkable rubber component that is generally used in the tire industry can be used. Examples of such a rubber component include isoprene-based rubber, butadiene rubber (BR), styrene-butadiene rubber (SBR), styrene-isoprene-butadiene copolymer rubber (SIBR), styrene-isobutylene-styrene block copolymer (SIBS), chloroprene rubber (CR), acrylonitrile-butadiene rubber (NBR), hydrogenated nitrile rubber (HNBR), isobutylene-isoprene-rubber (IIR), ethylene-propylene rubber, polynorbornene rubber, silicone rubber, polyethylene chloride rubber, fluororubber (FKM), acrylic rubber (ACM), and hydrin rubber. One rubber component may be selected from among these rubber components and used alone, or two or more rubber components may be selected from among these rubber components and used in combination.

The rubber component of the rubber composition for the base layer 30 preferably includes an isoprene-based rubber. The rubber component may include a rubber component other than the isoprene-based rubber or may be composed only of the isoprene-based rubber.

[Isoprene-Based Rubber]

Examples of the isoprene-based rubber include a natural rubber (NR), an isoprene rubber (IR), a reformed NR, a modified NR, and a modified IR. As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination. Among these, the NR is preferable.

In the case where the rubber component includes an NR, from the viewpoint that a base layer 30 having appropriate strength is formed and the risk of occurrence of damage such as chipping in the tread 4 can be reduced, a content CNR of the NR in 100 parts by mass of the rubber component is preferably 90 parts by mass or more, more

preferably 95 parts by mass or more, and further preferably 97 parts by mass or more. Particularly preferably, the content CNR of the NR in 100 parts by mass of the rubber component is 100 parts by mass, that is, the rubber component is composed only of the NR.

The rubber component of the rubber composition for the base layer 30 preferably includes either a butadiene rubber or a styrene-butadiene rubber, or both a butadiene rubber and a styrene-butadiene rubber, as a rubber component other than the isoprene-based rubber.

[Butadiene Rubber]

The butadiene rubber (BR) is not particularly limited, and, for example, BRs that are generally used in the tire industry, such as a BR having a cis content of less than 50% by mass (low-cis BR), a BR having a cis content of 90% by mass or more (high-cis BR), a rare-earth element-based butadiene rubber synthesized using a rare-earth element-based catalyst (rare-earth element-based BR), a BR containing syndiotactic polybutadiene crystals (SPB-containing BR), and modified BRs (modified high-cis BR, modified low-cis BR), can be used. These BRs may be used individually, or two or more of these BRs may be used in combination. The cis content of the BR is a value calculated by infrared absorption spectrum analysis.

In the case where the rubber component includes a BR, from the viewpoint of improving wear resistance, a content CBR of the BR in 100 parts by mass of the rubber component is preferably 1 part by mass or more and more preferably 2 parts by mass or more. The content CBR of the BR is preferably 10 parts by mass or less, more preferably 5 parts by mass or less, and further preferably 3 parts by mass or less.

[Styrene-Butadiene Rubber]

The styrene-butadiene rubber (SBR) is not particularly limited, and examples of the SBR include solution-polymerized SBRs (S-SBRs), emulsion-polymerized SBRs (E-SBRs), and modified SBRs thereof (modified S-SBRs and modified E-SBRs). Examples of the modified SBRs include an SBR whose terminals and/or main chain is modified, and a modified SBR (a condensate, one having a branch structure, etc.) coupled with tin, a silicon compound, or the like. Among these, the SBR included in the rubber component is preferably an S-SBR and a modified SBR. Furthermore, in the rubber composition, hydrogenated products of these SBRs (hydrogenated SBRs), etc., may also be used as the SBR. One SBR may be selected from among these SBRs and used alone, or two or more SBRs may be selected from among these SBRs and used in combination.

SBRs have excellent viscoelastic properties in a region highly correlated with wet performance (specifically, grip performance on a wet road surface) and have excellent compatibility and reactivity with silica described later. SBRs are considered to contribute to improving wet performance and wear resistance.

In the case where the rubber component includes an SBR, from the viewpoint of improving wear resistance and wet performance, a content CSBR of the SBR in 100 parts by mass of the rubber component is preferably 1 part by mass or more and more preferably 2 parts by mass or more. From the viewpoint of maintaining good ride comfort, the content CSBR of the SBR is preferably 10 parts by mass or less, more preferably 5 parts by mass or less, and further preferably 3 parts by mass or less.

[Filler]

As described above, the rubber composition for the tread contains a filler, and the filler includes carbon black and silica. In other words, this rubber composition contains carbon black and silica as a filler. The filler may include only carbon black and silica. In other words, the rubber composition may contain a filler composed only of carbon black and silica.

[Carbon Black]

The carbon black is not particularly limited, and, for example, carbon blacks that are common in the tire industry, such as GPF, FEF, HAF, ISAF, and SAF can be used. Also, from the viewpoint of reducing environmental load, and from the viewpoint of being able to reduce friction between the carbon black surface and the rubber molecular chain to suppress heat generation, recycled carbon black (rCB) obtained from pyrolysis of used tires can also be used for this tire. These carbon blacks may be used individually, or two or more of these carbon blacks may be used in combination.

In the present invention, carbon blacks that are common in the tire industry, such as GPF, FEF, HAF, ISAF, and SAF, described above, are also referred to as standard carbon black (sCB), in order to distinguish these carbon blacks from recycled carbon black (rCB).

As described above, the recycled carbon black can be obtained from a thermal decomposition process of used pneumatic tires. For example, the specification of European Patent Application Publication No. 3427975 mentions

"Rubber Chemistry and Technology", Vol. 85, No. 3, pp. 408-449 (2012), particularly pp. 438, 440, and 442, and states that recycled carbon black is obtained by thermal decomposition of organic materials at 550 to 800°C in an oxygen-free atmosphere, or by vacuum thermal decomposition at relatively low temperatures ([0027]). The carbon black obtained from such a thermal decomposition process, as mentioned in [0004] of Japanese Patent No. 6856781, normally lacks functional groups on the surface thereof (Comparison of surface morphology and chemistry between pyrolytic carbon black and commercially available carbon black, Powder Technology 160 (2005) 190-193).

The recycled carbon black may be carbon black that lacks functional groups on the surface thereof or may be carbon black that is treated to include a functional group on the surface thereof. The treatment to be performed to include a functional group on the surface of recycled carbon black can be carried out by a normal method. For example, in the specification of European Patent Application Publication No. 3173251, carbon black obtained from a thermal decomposition process is treated with potassium permanganate under acidic conditions to obtain carbon black including a hydroxyl and/or carboxyl group on the surface thereof. Furthermore, in Japanese Patent No. 6856781, carbon black obtained from a thermal decomposition process is treated with an amino acid compound including at least one thiol group or disulfide group to obtain carbon black whose surface is activated. The recycled carbon black according to the present embodiment also includes carbon black that is treated to include a functional group on the surface thereof.

As the recycled carbon black, products commercially available from Strebl Green Carbon Pte Ltd., LD Carbon Co., Ltd., etc., can be used.

From the viewpoint of improving wear resistance and durability, the average primary particle diameter of the carbon black is preferably 25 nm or less, more preferably 22 nm or less, and further preferably 19 nm or less. This average primary particle diameter is preferably 6 nm or more, more preferably 9 nm or more, and further preferably 12 nm or more.

The average primary particle diameter of the carbon black can be determined by observing the carbon black with a transmission or scanning electron microscope, measuring the outer diameters of 400 or more primary particles of the carbon black observed within the field of view, and obtaining the average of the measured outer diameters.

From the viewpoint of improving wear resistance and durability, the nitrogen adsorption specific surface area ($N_2SA$) of the carbon black is preferably 10 $m^2$/g or more, more preferably 20 $m^2$/g or more, and further preferably 30 $m^2$/g or more. The nitrogen adsorption specific surface area ($N_2SA$) is preferably 250 $m^2$/g or less, more preferably 200 $m^2$/g or less, and further preferably 150 $m^2$/g or less. The nitrogen adsorption specific surface area ($N_2SA$) of the carbon black is measured in accordance with JIS K6217-2: 2017.

A content BCB of the carbon black per 100 parts by mass of the rubber component is preferably 10 parts by mass or more and more preferably 15 parts by mass or more from the viewpoint of exhibiting reinforcing effects and from the viewpoint of preventing deterioration due to ultraviolet rays. The content BCB is preferably 26 parts by mass or less, more preferably 23 parts by mass or less, and further preferably 20 parts by mass or less from the viewpoint that the tread can have flexibility and alleviate stress.

The content of the recycled carbon black in 100 parts by mass of the carbon black is not particularly limited, but can be, for example, more than 1 part by mass, more than 5 parts by mass, more than 10 parts by mass, more than 20 parts by mass, more than 25 parts by mass, or more than 30 parts by mass. From the viewpoint of exhibiting the reinforcing effect of the carbon black, this content is preferably less than 95 parts by mass, more preferably less than 90 parts by mass, and further preferably less than 85 parts by mass.

[Silica]

The silica is not particularly limited, and for example, silicas that are common in the tire industry, such as a silica prepared by a dry process (anhydrous silica) and a silica prepared by a wet process (hydrous silica), can be used. Also, from the viewpoint of environmental load, silica made from a biomass material (for example, amorphous silica purified from rice husks) may be used. Among them, a hydrous silica prepared by a wet process is preferable because of a high silanol group content thereof. These silicas may be used individually, or two or more of these silicas may be used in combination.

Silica made from biomass materials can be produced, for example, by: extracting silicates from rice husk ash obtained by burning rice husks, using a sodium hydroxide solution; reacting the silicates with sulfuric acid in the same manner as conventional wet-processed silica to produce a silicon dioxide precipitate; and then filtering, washing with water, drying, and crushing the precipitate.

When silica crystallizes, the silica does not dissolve in water, so that silicic acid, which is a component thereof, cannot be used. By controlling combustion temperature and time, crystallization of silica in rice husk ash is suppressed (see Japanese Laid-Open Patent Publication No. 2009-2594, Akita Prefectural University Web Journal B/2019, Vol. 6, pp. 216-222, etc.).

Amorphous silica extracted from rice husks may be products commercially available from Wilmar International Limited, etc.

From the viewpoint of improving wear resistance and durability, the average primary particle diameter of the silica is preferably 22 nm or less, more preferably 19 nm or less, and further preferably 16 nm or less. This average primary

particle diameter is preferably 6 nm or more, more preferably 9 nm or more, and further preferably 12 nm or more.

The average primary particle diameter of the silica can be determined by observing the silica with a transmission or scanning electron microscope, measuring the outer diameters of 400 or more primary particles of the silica observed within the field of view, and obtaining the average of the measured outer diameters.

From the viewpoint of improving wear resistance and durability, the nitrogen adsorption specific surface area ($N_2SA$) of the silica is preferably 100 $m^2/g$ or more, more preferably 110 $m^2/g$ or more, and further preferably 120 $m^2/g$ or more. This nitrogen adsorption specific surface area is preferably 500 $m^2/g$ or less, more preferably 350 $m^2/g$ or less, and further preferably 250 $m^2/g$ or less.

The nitrogen adsorption specific surface area ($N_2SA$) of the silica is measured by the BET method in accordance with ASTM D3037-93.

A content BSi of the silica per 100 parts by mass of the rubber component is preferably 4 parts by mass or more. The silica can effectively reinforce the tread. Since the stiffness of the tread is increased, wear resistance and durability are improved. From this viewpoint, the content BSi of the silica is more preferably 7 parts by mass or more. From the viewpoint of being able to have flexibility and alleviate stress, the content BSi of the silica is preferably 20 parts by mass or less and more preferably 15 parts by mass or less.

The total of the content BCB of the carbon black and the content BSi of the silica is preferably less than 40 parts by mass. Accordingly, a base layer 30 having appropriate strength is formed, and the risk of occurrence of damage such as chipping in the tread 4 can be reduced. The base layer 30 can effectively contribute to exhibiting wet performance. From this viewpoint, the total of the content BCB of the carbon black and the content BSi of the silica is more preferably 35 parts by mass or less. From the viewpoint of improving wear resistance and durability, this total is preferably 15 parts by mass or more and more preferably 20 parts by mass or more.

[Other Fillers]

As fillers other than the silica and the carbon black, fillers that are conventionally and generally used in the tire industry, such as aluminum hydroxide, calcium carbonate, alumina, clay, and talc, can be blended.

[Silane Coupling Agent]

As described above, the rubber composition contains silica as a filler. The silica is preferably used in combination with a silane coupling agent. The silane coupling agent is not particularly limited, and any silane coupling agent that is conventionally used in combination with silica in the tire industry can be used. Examples of the silane coupling agent include: mercapto-based silane coupling agent such as 3-mercaptopropyltrimethoxysilane, and NXT-Z100, NXT-Z45, and NXT (3-octanoylthiopropyltriethoxysilane) manufactured by Momentive Performance Materials, Inc.; sulfide-based silane coupling agents such as bis(3-triethoxysilylpropyl)disulfide and bis(3-triethoxysilylpropyl)tetrasulfide; thioester-based silane coupling agents group such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among these, sulfide-based silane coupling agents and/or mercapto-based silane coupling agents are preferable, and mercapto-based silane coupling agents are more preferable. One of these silane coupling agents may be used alone, or two or more of these silane coupling agents may be used in combination.

A mercapto-based silane coupling agent means a silane coupling agent having a mercapto group and a silane coupling agent in which a mercapto group is protected by a protecting group. The mercapto-based silane coupling agent is not particularly limited, and is, for example, at least one compound selected from the group consisting of a compound represented by the following chemical formula (1), a compound represented by the following chemical formula (2), and a compound containing a linking unit A represented by the following chemical formula (3) and a linking unit B represented by the following chemical formula (4). Among them, for the reason that the advantageous effects of the present invention can be exhibited better, at least one of the compound represented by the following chemical formula (1) and the compound containing the linking unit A represented by the following chemical formula (3) and the linking unit B represented by the following chemical formula (4) is preferable, and the compound represented by the following chemical formula (1) is more preferable.

[Chem. 1]

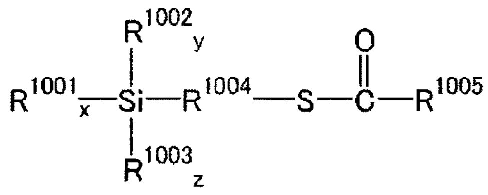

(1)

wherein $R^{1001}$ represents a monovalent group selected from -Cl, -Br, $-OR^{1006}$, $-O(O=)CR^{1006}$, - $ON=CR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of h is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and j is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and x, y, and z are numerals that satisfy the relationships of $x + y + 2z = 3$, $0 \leq x \leq 3$, $0 \leq y \leq 2$, and $0 \leq z \leq 1$.

[Chem. 2]

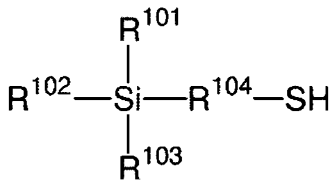

(2)

wherein $R^{101}$, $R^{102}$, and $R^{103}$ each represent an alkyl having 1 to 12 carbon atoms, an alkoxy having 1 to 12 carbon atoms, or a group represented by $-O-(R^{111}-O)_z-R^{112}$ (z $R^{111}$s each represent a divalent hydrocarbon group having 1 to 30 carbon atoms, $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms, and z represents an integer from 1 to 30), and $R^{104}$ represents an alkylene having 1 to 6 carbon atoms.

[Chem. 3]

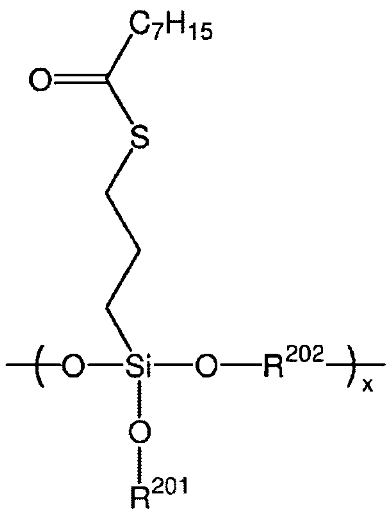

(3)

[Chem. 4]

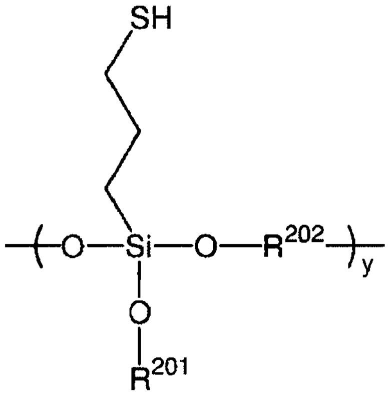

(4)

wherein x represents an integer equal to or greater than 0, y represents an integer equal to or greater than 1, each $R^{201}$ represents a hydrogen atom, an alkyl having 1 to 30 carbon atoms, an alkenyl having 2 to 30 carbon atoms, or an alkynyl having 2 to 30 carbon atoms (the alkyl, the alkenyl, and the alkynyl may be substituted with halogen atoms, hydroxyl, or carboxyl), each $R^{202}$ represents an alkylene having 1 to 30 carbon atoms, an alkenylene having 2 to 30 carbon atoms, or an alkynylene having 2 to 30 carbon atoms, and $R^{201}$ and $R^{202}$ may form a ring structure.

As for the compound represented by chemical formula (1), preferably, $R^{1005}$, $R^{1006}$, $R^{1007}$, and $R^{1008}$ are each independently a group selected from the group consisting of a linear, cyclic, or branched alkyl group, alkenyl group, aryl group, and aralkyl group each having 1 to 18 carbon atoms. In addition, in the case where $R^{1002}$ is a monovalent hydrocarbon group having 1 to 18 carbon atoms, $R^{1002}$ is preferably a group selected from the group consisting of a linear, cyclic, or branched alkyl group, alkenyl group, aryl group, and aralkyl group. $R^{1009}$ is preferably a linear, cyclic, or branched alkylene group, and is particularly preferably a linear alkylene group. Examples of $R^{1004}$ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, and an aralkylene group having 7 to 18 carbon atoms. The alkylene group and the alkenylene group may each be either linear or branched, and the cycloalkylene group, the cycloalkylalkylene group, the arylene group, and the aralkylene group may each have a functional group, such as a lower alkyl group, on the ring thereof. $R^{1004}$ is preferably an alkylene group having 1 to 6 carbon atoms, and is particularly preferably a linear alkylene group such as a methylene group, an ethylene group, a trimethylene group, a tetramethylene group, a pentamethylene group, and a hexamethylene group.

Specific examples of $R^{1002}$, $R^{1005}$, $R^{1006}$, $R^{1007}$, and $R^{1008}$ in chemical formula (1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of the linear alkylene group as $R^{1009}$ in chemical formula (1) include a methylene group, an ethylene group, an n-propylene group, an n-butylene group, and a hexylene group, and examples of the branched alkylene group as $R^{1009}$ in chemical formula (1) include an isopropylene group, an isobutylene group, and a 2-methylpropylene group.

Specific examples of the silane coupling agent represented by chemical formula (1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among them, 3-octanoylthiopropyltriethoxysilane is preferable.

The silane coupling agent represented by chemical formula (1) has a thioester structure (that is, a protected mercapto group) in the molecule thereof and has low reactivity with the rubber component up to high temperatures, and strong bond between the rubber component, the silane coupling agent, and the silica during kneading can be suppressed, and the silica can be appropriately dispersed. Thus, the advantageous effects of the present invention tend to be able to be more favorably achieved.

Examples of the compound represented by chemical formula (2) include 3-mercaptopropyltrimethoxysilane, 3-mercaptopropyltriethoxysilane, 2-mercaptoethyltrimethoxysilane, 2-mercaptoethyltriethoxysilane, and a compound represented by the following chemical formula (5) (Si363, manufactured by Evonik Degussa GmbH), and the compound

represented by the following chemical formula (5) is suitable for use. One of these compounds may be used alone, or two or more of these compounds may be used in combination.

[Chem. 5]

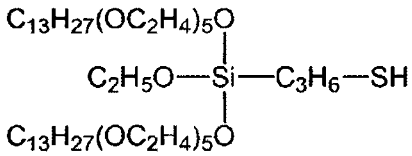

(5)

Examples of the compound containing the linking unit A represented by chemical formula (3) and the linking unit B represented by chemical formula (4) include those manufactured and sold by Momentive Performance Materials, Inc. One of these compounds may be used alone, or two or more of these compounds may be used in combination.

The content of the silane coupling agent (in the case where a plurality of silane coupling agents are used in combination, the total content of all the silane coupling agents) per 100 parts by mass of the silica is preferably more than 1 part by mass, more preferably more than 3 parts by mass, further preferably more than 5 parts by mass, and further preferably more than 7 parts by mass from the viewpoint of enhancing the dispersibility of the silica. Also, from the viewpoint of preventing a decrease in wear resistance, this content is preferably less than 20 parts by mass, more preferably less than 15 parts by mass, and further preferably less than 12 parts by mass.

[Other Ingredients]

In addition to the components described above, the rubber composition according to the present embodiment can contain ingredients that are conventionally and generally used in the tire industry, such as a softener, a wax, stearic acid, zinc oxide, an antioxidant, a vulcanizing agent, and a vulcanization accelerator, as appropriate.

Examples of the softener include a resin component, an oil, and a liquid rubber.

The resin component that can be used in the present embodiment is not particularly limited, a resin that is commonly used in the tire industry can be used, and examples of such a resin component include adhesive resins such as a C9-based resin, a C5-based resin, a C5C9-based resin, a dicyclopentadiene-based resin, an aromatic vinyl-based resin, a coumarone-based resin, an indene-based resin, a terpene-based resin, a rosin-based resin, and a phenol-based resin. One of these resin components may be used alone, or two or more of these resin components may be used in combination.

The C9-based resin refers to a resin obtained by polymerizing a C9 fraction and may be either a resin obtained by polymerizing the C9 fraction alone or a copolymer obtained by copolymerizing the C9 fraction and another component. For example, a resin obtained by copolymerizing dicyclopentadiene (DCPD) and the C9 fraction is called a DCPD/C9 resin. In addition, the C9-based resin may be a hydrogenated or modified product of one of these resins. Examples of the C9 fraction include petroleum fractions each having 8 to 10 carbon atoms such as vinyl toluene, alkylstyrene, coumarone, indene, methylindene, and dicyclopentadiene. One of these C9-based resins may be used alone, or two or more of these C9-based resins may be used in combination.

The C5-based resin refers to a resin obtained by polymerizing a C5 fraction other than dicyclopentadiene and may be a hydrogenated or modified product of the resin. Examples of the C5 fraction other than dicyclopentadiene include petroleum fractions each having 4 to 5 carbon atoms such as cyclopentadiene, isoprene, pentane, isopentane, neopentane, pentene, and pentadiene. One of these C5-based resins may be used alone, or two or more of these C5-based resins may be used in combination.

The C5C9-based resin refers to a resin obtained by copolymerizing the above C5 fraction and the above C9 fraction and may be a hydrogenated or modified product of the resin. As the C5C9-based resin, for example, products commercially available from Tosoh Corporation, Zibo Luhua Hongjin New Material Co., Ltd, etc., can be used. One of these C5C9-based resins may be used alone, or two or more of these C5C9-based resins may be used in combination.

The dicyclopentadiene-based resin refers to a resin including cyclopentadiene (CPD) or dicyclopentadiene (DCPD) as a monomer component and may be a hydrogenated or modified product of the resin. Examples of the dicyclopentadiene-based resin include DCPD/C9 resins including dicyclopentadiene and the C9 fraction as monomer components (DCPD/C9 resins may be hydrogenated or modified), a DCPD/C9 resin including dicyclopentadiene and styrene as monomer components is preferable, and a DCPD/C9 resin including dicyclopentadiene, styrene, and indene as monomer components is particularly preferable. As the dicyclopentadiene-based resin, for example, products commercially available from Exxon Mobil Corporation, ENEOS Corporation, Zeon Corporation, Maruzen Petrochemical Co., Ltd., etc., can be used. One of these dicyclopentadiene-based resins may be used alone, or two or more of these dicyclopentadiene-based resins may be used in combination.

The aromatic vinyl-based resin refers to a resin including an aromatic vinyl compound such as styrene, α-methylstyrene, vinyl toluene, and p-chlorostyrene as a monomer component having a highest content, and may be a hydrogenated or modified product of the resin. As the aromatic vinyl-based resin, for the reasons that the resin is economic, is easily processed, and has excellent heat generation properties, an α-methylstyrene or styrene homopolymer or a copolymer of α-methylstyrene and styrene is preferable, and a copolymer of α-methylstyrene and styrene is more preferable. As the aromatic vinyl-based resin, for example, products commercially available from Kraton Corporation, Eastman Chemical Company, Mitsui Chemicals, Inc., etc., can be used. One of these aromatic vinyl-based resins may be used alone, or two or more of these aromatic vinyl-based resins may be used in combination.

The coumarone-based resin refers to a resin including coumarone as a monomer component and may be a hydrogenated or modified product of the resin. Examples of the coumarone-based resin include a coumarone-indene resin including coumarone and indene as monomer components, and a coumarone-indene-styrene resin including coumarone, indene, and styrene as monomer components. One of these coumarone-based compounds may be used alone, or two or more of these coumarone-based compounds may be used in combination.

The indene-based resin refers to a resin including indene as a monomer component and may be a hydrogenated or modified product of the resin. Examples of the indene-based resin include a coumarone-indene resin including coumarone and indene as monomer components, and a coumarone-indene-styrene resin including coumarone, indene, and styrene as monomer components. One of these indene-based compounds may be used alone, or two or more of these indene-based compounds may be used in combination.

The terpene-based resin refers to a resin including a terpene compound such as α-pinene, β-pinene, limonene, and dipentene as a monomer component having a highest content and may be a hydrogenated or modified product of the resin. Specific examples of the terpene-based resin include: a polyterpene resin including only one or more of the terpene compounds as a monomer component; an aromatic modified terpene resin including the terpene compound and an aromatic compound as a monomer component; and a terpene-phenol resin including the terpene compound and a phenol-based compound as a monomer component. Examples of the aromatic compound that serves as the monomer component of the aromatic modified terpene resin include styrene, α-methylstyrene, vinyl toluene, and divinyl toluene. Examples of the phenol-based compound that serves as the monomer component of the terpene-phenol resin include phenol, bisphenol A, cresol, and xylenol. One of these terpene-based resins may be used alone, or two or more of these terpene-based resins may be used in combination.

The rosin-based resin refers to a resin including a rosin acid compound such as abietic acid, neoabietic acid, palustric acid, and isopimaric acid and may be a hydrogenated or modified product of the resin. The rosin-based resin is not particularly limited, and examples of the rosin-based resin include natural resin rosins, and rosin-modified resins modified by hydrogenation, disproportionation, dimerization, esterification, etc., of the natural resin rosins. One of these rosin-based resins may be used alone, or two or more of these rosin-based resins may be used in combination.

The phenol-based resin refers to a resin including a phenol compound such as phenol and cresol as a monomer component having a highest content. The phenol-based resin is not particularly limited, and examples of the phenol-based resin include phenol formaldehyde resins, alkylphenol formaldehyde resins, alkylphenol-acetylene resins, and oil-modified phenol formaldehyde resins. One of these phenol-based resins may be used alone, or two or more of these phenol-based resins may be used in combination.

From the viewpoint of ride comfort and wet performance, the softening point of the resin component is preferably 80°C or higher, more preferably 90°C or higher, and further preferably 100°C or higher. Also, from the viewpoint of improving processability and dispersibility between the rubber component and the filler, this softening point is preferably 150°C or lower, more preferably 140°C or lower, and further preferably 130°C or lower. The softening point of the resin is a softening point that is measured with a ring and ball softening point measuring device in accordance with 7.7 of JIS K 6220-1: 2015 and that is a temperature at which a ball has descended.

In the case where the rubber composition contains a resin component, the content of the resin component per 100 parts by mass of the rubber component is preferably 1 part by mass or more, more preferably 3 parts by mass or more, and further preferably 5 parts by mass or more from the viewpoint of ride comfort and wet performance. From the viewpoint of reducing heat generation properties, the content of the resin component is preferably 60 parts by mass or less, more preferably 50 parts by mass or less, further preferably 40 parts by mass or less, and particularly preferably 30 parts by mass or less.

Examples of the oil include process oils, vegetable fats and oils, and animal fats and oils. Examples of the process oils include paraffinic process oils, naphthenic process oils, and aromatic process oils. A process oil that has a low content of a polycyclic aromatic (PCA) compound and for which environmental impact is taken into consideration can also be used. Examples of the low PCA content process oil include a mild extraction solvate (MES), a treated distillate aromatic extract (TDAE), and a heavy naphthenic oil.

In the case where the rubber composition contains an oil, the content of the oil per 100 parts by mass of the rubber component is preferably 1 part by mass or more, more preferably 3 parts by mass or more, and further preferably 5 parts by mass or more from the viewpoint of improving processability. From the viewpoint of improving wear resistance, the content of the oil is preferably 90 parts by mass or less, more preferably 70 parts by mass or less, further preferably 50 parts by

mass or less, and particularly preferably 30 parts by mass or less.

The liquid rubber is not particularly limited as long as the liquid rubber is a polymer that is in a liquid state at room temperature (25°C), and examples of the liquid rubber include liquid butadiene rubber (liquid BR), liquid styrene-butadiene rubber (liquid SBR), liquid isoprene rubber (liquid IR), liquid styrene-isoprene rubber (liquid SIR), and liquid farnesene rubber. These liquid rubbers may be used individually, or two or more of these liquid rubbers may be used in combination.

In the case where the rubber composition contains a liquid rubber, the content of the liquid rubber per 100 parts by mass of the rubber component is preferably 1 part by mass or more, more preferably 3 parts by mass or more, and further preferably 5 parts by mass or more. The content of the liquid rubber is preferably 50 parts by mass or less, more preferably 40 parts by mass or less, and further preferably 20 parts by mass or less.

The wax is not particularly limited, and examples of the wax include: petroleum waxes such as paraffin wax and microcrystalline wax; and synthesized waxes such as polymers of ethylene, propylene, and the like. As commercially available products, products of OUCHI SHINKO CHEMICAL INDUSTRIAL CO., LTD., NIPPON SEIRO CO., LTD., Seiko Chemical Co., Ltd., etc., can be used. These waxes may be used individually, or two or more of these waxes may be used in combination.

In the case where the rubber composition contains a wax, the content of the wax per 100 parts by mass of the rubber component is preferably 0.5 parts by mass or more, more preferably 1.0 part by mass or more, and further preferably 1.5 parts by mass or more from the viewpoint of the weather resistance of the rubber. From the viewpoint of preventing whitening of the tire due to blooming, the content of the wax is preferably 10 parts by mass or less and more preferably 5.0 parts by mass or less.

The antioxidant is not particularly limited, but examples of the antioxidant include antioxidants such as amine-based compounds, quinoline-based compounds, quinone-based compounds, phenol-based compounds, imidazole-based compounds, and carbamic acid metal salts. Phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as a 2,2,4-trimethyl-1,2-dihydroquinoline polymer and 6-ethoxy-2,2,4-trimethyl-1,2-dihydroquinoline are preferable. These antioxidants may be used individually, or two or more of these antioxidants may be used in combination.

In the case where the rubber composition contains an antioxidant, the content of the antioxidant per 100 parts by mass of the rubber component is preferably 0.5 parts by mass or more, more preferably 1.0 part by mass or more, and further preferably 1.5 parts by mass or more from the viewpoint of the ozone crack resistance of the rubber. The content of the antioxidant is preferably 10 parts by mass or less and more preferably 5.0 parts by mass or less from the viewpoint of wear resistance and wet grip performance.

As the stearic acid, a conventionally known one can be used, and, for example, products of NOF Corporation, Kao Corporation, FUJIFILM Wako Pure Chemical Corporation, Chiba Fatty Acid Co., Ltd., etc., can be used. These stearic acids may be used individually, or two or more of these stearic acids may be used in combination.

In the case where the rubber composition contains stearic acid, the content of the stearic acid per 100 parts by mass of the rubber component is preferably 0.5 parts by mass or more, more preferably 1.0 part by mass or more, and further preferably 1.5 parts by mass or more from the viewpoint of processability. The content of the stearic acid is preferably 10 parts by mass or less and more preferably 5.0 parts by mass or less from the viewpoint of the vulcanization rate.

As the zinc oxide, a conventionally known one can be used, and, for example, products of Mitsui Mining & Smelting Co., Ltd., Toho Zinc Co., Ltd., Hakusui Tech Co., Ltd., SEIDO CHEMICAL INDUSTRY CO., LTD., Sakai Chemical Industry Co., Ltd., etc., can be used. These zinc oxides may be used individually, or two or more of these zinc oxides may be used in combination.

In the case where the rubber composition contains zinc oxide, the content of the zinc oxide per 100 parts by mass of the rubber component is preferably 0.5 parts by mass or more, more preferably 1.0 part by mass or more, and further preferably 1.5 parts by mass or more from the viewpoint of processability. The content of the zinc oxide is preferably 10 parts by mass or less and more preferably 5.0 parts by mass or less from the viewpoint of wear resistance.

As the vulcanizing agent, sulfur is suitably used. As the sulfur, powdery sulfur, oil-treated sulfur, precipitated sulfur, colloidal sulfur, insoluble sulfur, highly dispersible sulfur, etc., can be used.

In the case where the rubber composition contains sulfur as the vulcanizing agent, the content of the sulfur per 100 parts by mass of the rubber component is preferably 0.1 parts by mass or more, more preferably 0.5 parts by mass or more, and further preferably 1.0 part by mass or more from the viewpoint of ensuring a sufficient vulcanization reaction. The content of the sulfur is preferably 5.0 parts by mass or less, more preferably 4.0 parts by mass or less, and further preferably 3.5 parts by mass or less from the viewpoint of preventing deterioration. In the case of using oil-containing sulfur as the vulcanizing agent, the content of the vulcanizing agent is represented as the amount of pure sulfur contained in the oil-containing sulfur.

Examples of vulcanizing agents other than sulfur include alkylphenol-sulfur chloride condensates, 1,6-hexamethylene sodium dithiosulfate dihydrate, and 1,6-bis(N,N'-dibenzylthiocarbamoyldithio)hexane. As these vulcanizing

agents other than sulfur, products commercially available from Taoka Chemical Co., Ltd., LANXESS, Flexsys, etc., can be used.

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based vulcanization accelerators, aldehyde-ammonia-based vulcanization accelerators, imidazoline-based vulcanization accelerators, and xanthate-based vulcanization accelerators. These vulcanization accelerators may be used individually, or two or more of these vulcanization accelerators may be used in combination. Among them, from the viewpoint that the desired effects are exhibited better, one or more vulcanization accelerators selected from the group consisting of sulfenamide-based vulcanization accelerators, guanidine-based vulcanization accelerators, and thiazole-based vulcanization accelerators are preferable, and sulfenamide-based vulcanization accelerators are more preferable.

Examples of the sulfenamide-based vulcanization accelerators include N-tert-butyl-2-benzothiazolyl sulfenamide (TBBS), N-cyclohexyl-2-benzothiazolyl sulfenamide (CBS), and N,N-dicyclohexyl-2-benzothiazolyl sulfenamide (DCBS). Among them, N-tert-butyl-2-benzothiazolyl sulfenamide (TBBS) and N-cyclohexyl-2-benzothiazolyl sulfenamide (CBS) are preferable.

Examples of the guanidine-based vulcanization accelerators include 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, and 1,3-di-o-cumenyl-2-propionylguanidine. Among them, 1,3-diphenylguanidine (DPG) is preferable.

Examples of the thiazole-based vulcanization accelerators include 2-mercaptobenzothiazole, a cyclohexylamine salt of 2-mercaptobenzothiazole, and di-2-benzothiazolyl disulfide. Among them, 2-mercaptobenzothiazole is preferable.

In the case where the rubber composition contains a vulcanization accelerator, the content of the vulcanization accelerator per 100 parts by mass of the rubber component is preferably 1.0 part by mass or more, more preferably 1.5 parts by mass or more, and further preferably 2.0 parts by mass or more. The content of the vulcanization accelerator is preferably 8.0 parts by mass or less, more preferably 7.0 parts by mass or less, further preferably 6.0 parts by mass or less, and particularly preferably 5.0 parts by mass or less. When the content of the vulcanization accelerator is set within such a range, there is a tendency that a fracture strength and elongation can be ensured.

The rubber composition is produced, for example, by kneading the respective components described above, using a rubber kneading device such as an open roll and a Banbury mixer.

As for the kneading conditions, in a base kneading step of kneading the additives other than the vulcanizing agent and the vulcanization accelerator, the kneading temperature is normally 100 to 180°C and preferably 120 to 170°C. In a finish kneading step of kneading the vulcanizing agent and the vulcanization accelerator, the kneading temperature is normally 120°C or lower and preferably 85 to 110°C.

The produced rubber composition is processed into a predetermined shape using an extruder or the like. On a forming machine, the processed rubber composition is combined with sidewalls, etc., to prepare a green tire (uncrosslinked tire). The green tire is vulcanized within a mold built in a vulcanizer, to obtain a tire. The tire is a crosslinked product of the green tire. The vulcanization temperature is normally 140 to 190°C and preferably 150 to 185°C. The vulcanization time is normally 5 to 15 minutes.

As described above, the land portion 12 has the sipes 26. As shown in FIG. 3, the bottom 26T of each sipe 26 is located within the base layer 30.

In FIG. 3, a length indicated by a double-headed arrow DU is the depth of the sipe 26 in the base layer 30. The depth DU of the sipe 26 in the base layer 30 is represented as the distance in the depth direction from the outer surface of the base layer 30 (in other words, the boundary 32 between the cap layer 28 and the base layer 30) to the bottom 26T of the sipe 26.

Of the plurality of land portions 12 of the tread 4, at least one land portion 12 has a sipe 26 having a bottom 26T within the base layer 30. Even when the cap layer 28 disappears due to wear and the base layer 30 becomes exposed, the sipe 26 can contribute to exhibiting wet performance.

The base layer 30 is formed from the rubber composition described above. As described above, the rubber composition for the base layer 30 contains a rubber component and a filler, and the filler includes carbon black and silica. A ratio Sr of the content BSi of the silica to the total of the content BCB of the carbon black per 100 parts by mass of the rubber component and the content BSi of the silica per 100 parts by mass of the rubber component is greater than 0.20.

The base layer 30 for which the content BSi of the silica is adjusted in consideration of the content BCB of the carbon black is used for the tread 4 of the tire 2. Therefore, in a state where the base layer 30 is exposed, the base layer 30 itself can contribute to exhibiting wet performance.

Furthermore, a ratio Ur of the thickness TU of the base layer 30 to the depth DGm of the circumferential main groove 10 is 0.20 or more and 0.60 or less.

Since the thickness TU of the base layer 30 is adjusted based on the depth DGm of the circumferential main

groove 10, occurrence of damage due to the presence of the sipe 26 is effectively suppressed. Since the base layer 30 becomes exposed at an effective timing, a decrease in wet performance is suppressed.

The ratio Sr, the thickness TU of the base layer 30, and the depth DU of the sipe 26 in the base layer 30 satisfy the following relational expression.

$$Sr \times DU/TU \geq 0.010$$

Since the depth DU of the sipe 26 in the base layer 30 and the content BSi of the silica are adjusted in a well-balanced manner, the tire 2 can effectively increase the contribution of the sipe 26 and the contribution of the base layer 30 to wet performance after the base layer 30 becomes exposed while suppressing occurrence of damage due to the presence of the sipe 26.

The tire 2 can exhibit good wet performance even in a state where the base layer 30 is exposed.

From the viewpoint of improving wet performance in a state where the base layer 30 is exposed, the value obtained by the above relational expression, that is, a product SDT of the ratio Sr and a ratio DU/TU of the depth DU of the sipe 26 in the base layer 30 to the thickness TU of the base layer 30 is preferably 0.013 or more, more preferably 0.015 or more, and further preferably 0.020 or more. In addition, from the viewpoint of reducing the risk of occurrence of damage due to the presence of the sipe 26, the product SDT is preferably 0.25 or less, more preferably 0.15 or less, and further preferably 0.050 or less.

As described above, the ratio Sr of the content BSi of the silica to the total of the content BCB of the carbon black and the content BSi of the silica is greater than 0.20. From the viewpoint of improving wet performance in a state where the base layer 30 is exposed, the ratio Sr is more preferably 0.25 or more. From the viewpoint of reducing the risk of occurrence of damage due to the presence of the sipe 26, the ratio Sr is preferably 0.60 or less and more preferably 0.55 or less.

As described above, the ratio Ur of the thickness TU of the base layer 30 to the depth DGm of the circumferential main groove 10 is 0.20 or more and 0.60 or less.

From the viewpoint that the exposed base layer 30 can effectively contribute to exhibiting wet performance, the ratio Ur is preferably 0.25 or more and more preferably 0.30 or more. From the viewpoint of effectively suppressing occurrence of damage due to the presence of the sipe 26, the ratio Ur is preferably 0.55 or less and more preferably 0.50 or less.

If the bottom 26T of the sipe 26 is within the base layer 30, the sipe 26 can contribute to improving wet performance in a state where the base layer 30 is exposed. Since the depth of the sipe 26 also influences the stiffness of the land portion 12, the lower limit of the depth DU of the sipe 26 in the base layer 30 is determined as appropriate according to the specifications of the tire 2. If the sipe 26 can contribute to improving wet performance in a state where the base layer 30 is exposed, the depth DU of the sipe 26 in the base layer 30 may be 0.5 mm. The deeper the sipe 26 is, the more strain is concentrated on the bottom 26T, and the higher the risk of occurrence of damage such as chipping in the tread 4 is. From the viewpoint of reducing the risk of occurrence of damage, the ratio DU/TU of the depth DU of the sipe 26 in the base layer 30 to the thickness TU of the base layer 30 is preferably 1.0 or less and more preferably 0.9 or less.

In the tire 2, a loss tangent LTu of the base layer 30 at a temperature of 0°C, the thickness TU of the base layer 30, and the depth DU of the sipe 26 in the base layer 30 preferably satisfy the following relational expression.

$$LTu \times DU/TU \geq 0.0090$$

Accordingly, the tire 2 can effectively increase the contribution of the sipe 26 and the contribution of the base layer 30 to wet performance. From this viewpoint, the value obtained by the above relational expression, that is, a product LDT of the loss tangent LTu and the ratio DU/TU of the depth DU to the thickness TU is preferably 0.0094 or more. From the viewpoint of reducing the risk of occurrence of damage due to the presence of the sipe 26, the product LDT is preferably 0.0100 or less.

In the tire 2, the loss tangent LTu of the base layer 30 at a temperature of 0°C is preferably 0.140 or more and 0.170 or less.

When the loss tangent LTu is set to 0.140 or more, the base layer 30 can effectively contribute to exhibiting wet performance. From this viewpoint, the loss tangent LTu is more preferably 0.145 or more.

When the loss tangent LTu is set to 0.170 or less, the risk of occurrence of damage due to the presence of the sipe 26 is reduced. From this viewpoint, the loss tangent LTu is more preferably 0.165 or less.

FIG. 4 shows a modification of the sipe 26 (specifically, the lateral sipe 22). FIG. 5 shows a cross-section of the sipe 26 along a line V-V in FIG. 4.

As shown in FIG. 4, the sipe 26 extends in a zigzag manner in the length direction thereof. As shown in FIG. 5, the sipe 26 also extends in a zigzag manner in the depth direction thereof. This sipe 26 extends in a zigzag manner in the length direction and the depth direction thereof. The amplitude of the zigzag is preferably 0.5 mm or more and 3.0 mm or less, for

example.

The sipe 26 shown in FIGS. 4 and 5 is a three-dimensional sipe. When the tread 4 becomes deformed and wall surfaces 26S of the sipe 26 come into close contact with each other, the wall surfaces 26S constrain each other and the stiffness of the tread 4 is effectively increased. The movement of the tread 4 is suppressed, so that occurrence of damage due to the presence of the sipe 26 is suppressed. The sipe 26 and the base layer 30 can effectively contribute to exhibiting good wet performance. From this viewpoint, it is preferable that the sipe 26 extends in a zigzag manner in the length direction and the depth direction thereof.

FIG. 6 shows another modification of the sipe 26 (specifically, the lateral sipe 22).

This sipe 26 includes a sipe body 34 and a tubular portion 36. The sipe body 34 includes the opening 26M of the sipe 26. The tubular portion 36 includes the bottom 26T of the sipe 26. The sipe 26 shown in FIG. 3 is a sipe composed only of the sipe body 34.

Although not shown, the sipe body 34 extends straight in the length direction of the sipe 26, as in the sipe 26 shown in FIG. 1, that is, as in the lateral sipe 22. As shown in FIG. 6, the sipe body 34 extends straight in the depth direction of the sipe 26. In FIG. 6, a length indicated by a double-headed arrow WGp is the width of the sipe body 34. The sipe body 34 has a width WGp that is uniform in the depth direction.

The tubular portion 36 is located radially inward of the sipe body 34. The tubular portion 36 extends in the length direction of the sipe 26.

In FIG. 6, a solid line LB is a boundary line between the sipe body 34 and the tubular portion 36. A length indicated by a double-headed arrow WB is the width of the sipe 26 measured along the boundary line LB. The boundary line LB is set at a position at which the width WB of the sipe 26 is 1.0 mm. In FIG. 6, a position indicated by reference character PB is the boundary between the sipe body 34 and the tubular portion 36.

The width WGp of a portion outside the boundary line LB (i.e., the sipe body 34) is less than 1.0 mm. The width of a portion inside the boundary line LB (i.e., the tubular portion 36) is 1.0 mm or more. The width of the tubular portion 36 is wider than the width of the sipe body 34.

The tubular portion 36 extends inward from the position of the boundary line LB. In FIG. 6, a length indicated by a double-headed arrow WX is the maximum width of the tubular portion 36. In FIG. 6, a position indicated by reference character PX is a position at which the tubular portion 36 has the maximum width WX. The tubular portion 36 is tapered outward from a portion having the maximum width WX. The tubular portion 36 is tapered inward from the portion having the maximum width WX.

The cross-sectional shape of the tubular portion 36 may be circular or may be elliptical. The cross-sectional shape may be a shape in which the portion having the maximum width WX is represented by a straight line and the sipe body 34 side and the bottom 26T side of the straight portion are represented by arcs (hereinafter, this shape is also referred to as track shape).

The sipe body 34 can function as an edge component. The sipe body 34 can contribute to exhibiting wet performance. When the sipe body 34 disappears, the tubular portion 36 becomes exposed. The tubular portion 36 has a wide width. After the sipe body 34 disappears, the tubular portion 36 can contribute to maintaining wet performance. In the sipe 26 shown in FIG. 6, strain generated in a portion at the bottom 26T of the sipe 26 is reduced compared to a sipe in which no tubular portion 36 is provided as in the sipe 26 shown in FIG. 3. The sipe 26 including the sipe body 34 and the tubular portion 36 can contribute to reducing the risk of occurrence of damage such as chipping in the tread 4. From this viewpoint, it is preferable that the sipe 26 includes the sipe body 34 and the tubular portion 36 located radially inward of the sipe body 34 and having the bottom 26T, and the tubular portion 36 has a width wider than the width of the sipe body 34.

As described above, the cap layer 28 is softer than the base layer 30. There is a concern that wet performance may decrease when the tread 4 in contact with a road surface changes from the cap layer 28 to the base layer 30.

However, as shown in FIG. 6, the maximum width position PX of the tubular portion 36 is located within the base layer 30. In a state where the base layer 30 is exposed, the tubular portion 36 can contribute to an increase in groove volume. Accordingly, the drainage performance of the tire 2 is improved. The sipe 26 including the tubular portion 36 can contribute to improving wet performance in a state where the base layer 30 is exposed. A decrease in wet performance which is a concern when the tread 4 in contact with a road surface changes from the cap layer 28 to the base layer 30 is suppressed. The tire 2 can exhibit good wet performance even in a state where the base layer 30 is exposed. From this viewpoint, in the case where the sipe 26 includes the tubular portion 36, it is preferable that the tubular portion 36 has the maximum width WX within the base layer 30.

In the case where the sipe 26 includes the tubular portion 36 and the tubular portion 36 has the maximum width WX within the base layer 30, the boundary PB between the sipe body 34 and the tubular portion 36 may be located radially inward of the boundary 32 between the cap layer 28 and the base layer 30 as shown in FIG. 6. As shown in FIG. 7, in the case where the cap layer 28 is thick, the boundary PB between the sipe body 34 and the tubular portion 36 may be located radially outward of the boundary 32 between the cap layer 28 and the base layer 30. As shown in FIG. 8, even in the case where a shallow sipe 26 is adopted, the boundary PB between the sipe body 34 and the tubular portion 36 may be located radially outward of the boundary 32 between the cap layer 28 and the base layer 30. From the viewpoint that the tubular

portion 36 can effectively contribute to exhibiting wet performance, it is more preferable that the boundary PB between the sipe body 34 and the tubular portion 36 is located radially inward of the boundary 32 between the cap layer 28 and the base layer 30.

In FIG. 6, a length indicated by a double-headed arrow DB is the distance in the depth direction from the boundary 32 between the cap layer 28 and the base layer 30 to the boundary PB between the sipe body 34 and the tubular portion 36. The distance DB is represented by a positive number when the boundary PB between the sipe body 34 and the tubular portion 36 is located inward of the boundary 32 between the cap layer 28 and the base layer 30. When the boundary PB between the sipe body 34 and the tubular portion 36 is located outward of the boundary 32 between the cap layer 28 and the base layer 30 as shown in FIG. 7 or 8, the distance DB is represented by a negative number. When the distance DB is 0 (zero) mm, it means that the boundary PB between the sipe body 34 and the tubular portion 36 and the boundary 32 between the cap layer 28 and the base layer 30 are at the same position in the depth direction of the sipe 26.

From the viewpoint that a change in wet performance is reduced to be smaller when the tread 4 in contact with a road surface changes from the cap layer 28 to the base layer 30, the distance DB in the depth direction from the boundary 32 between the cap layer 28 and the base layer 30 to the boundary PB between the sipe body 34 and the tubular portion 36 is preferably -10 mm or more and 15 mm or less, and more preferably -5 mm or more and 10 mm or less. The distance DB is more preferably 0 mm or more and 5 mm or less.

The maximum width WX of the tubular portion 36 is preferably 4 times or more and more preferably 5 times or more the width WGp of the sipe body 34. Accordingly, the tubular portion 36 can contribute to maintaining wet performance. The maximum width WX of the tubular portion 36 is preferably 13 times or less and more preferably 12 times or less the width WGp of the sipe body 34. Accordingly, the size of the tubular portion 36 is appropriately maintained. A decrease in the stiffness of the land portion 12 (specifically, the block 20) is suppressed.

The tubular portion 36 has a bottom surface 26B including the bottom 26T of the sipe 26. In the cross-section shown in FIG. 6, the contour of the bottom surface 26B of the tubular portion 36 is represented by an arc passing through the bottom 26T. In FIG. 6, an arrow Rb indicates the radius of this arc.

The radius Rb of the arc representing the contour of the bottom surface 26B of the tubular portion 36 is preferably 1.5 mm or more and 3.5 mm or less.

When the radius Rb is set to 1.5 mm or more, strain generated in the portion at the bottom 26T of the sipe 26 is reduced. The tubular portion 36 can contribute to reducing the risk of occurrence of damage such as chipping in the tread 4. From this viewpoint, the radius Rb is more preferably 2.0 mm or more.

When the radius Rb is set to 3.5 mm or less, a decrease in the stiffness of the land portion 12 due to the tubular portion 36 being provided in the sipe 26 is suppressed. The stiffness of the land portion 12 is appropriately maintained. The tire 2 can improve uneven wear resistance. From this viewpoint, the radius Rb is more preferably 3.0 mm or less.

In FIG. 6, a length indicated by a double-headed arrow DGb is the depth of the sipe body 34. A length indicated by a double-headed arrow DGp is the depth of the sipe 26.

The ratio (DGb/DGp) of the depth DGb of the sipe body 34 to the depth DGp of the sipe 26 is preferably 0.50 or more and 0.80 or less.

When the ratio (DGb/DGp) is set to 0.50 or more, the influence of providing the tubular portion 36 in the sipe 26 on the stiffness of the land portion 12 is suppressed to be smaller. The stiffness of the land portion 12 is appropriately maintained. The tire 2 can improve uneven wear resistance. From this viewpoint, the ratio (DGb/DGp) is more preferably 0.60 or more.

When the ratio (DGb/DGp) is set to 0.80 or less, the tubular portion 36 can contribute to exhibiting wet performance. From this viewpoint, the ratio (DGb/DGp) is more preferably 0.70 or less.

FIG. 9 shows still another modification of the sipe 26. As shown in FIG. 9, the sipe body 34 shown in FIG. 6 may be formed as a three-dimensional sipe, like the sipe 26 shown in FIG. 9. In this case, when the tread 4 becomes deformed and the wall surfaces 26S of the sipe 26 come into contact with each other, both wall surfaces 26S are in sufficiently close contact with each other. The deformation of the land portion 12 is effectively suppressed. The tire 2 can effectively increase the contribution of the sipe 26 and the contribution of the base layer 30 to wet performance after the base layer 30 becomes exposed while suppressing occurrence of damage due to the presence of the sipe 26.

As is obvious from the above description, according to the present invention, the tire 2 that can exhibit good wet performance even in a state where the base layer is exposed, is obtained.

## EXAMPLES

Hereinafter, the present invention will be described in further detail by means of examples, etc., but the present invention is not limited to these examples.

Various chemicals used in Examples and Comparative Examples are listed below. NR: TSR20

Carbon black: DIABLACK N134 ($N_2SA$: 148 $m^2/g$) manufactured by Mitsubishi Chemical Corporation.

Silica: ULTRASIL VN3 ($N_2SA$: 175 $m^2/g$, average primary particle diameter: 17 nm) manufactured by Evonik

Industries AG.

Silane coupling agent: Si266 (bis(3-triethoxysilylpropyl)disulfide) manufactured by Evonik Degussa GmbH.

Wax: OZOACE-0355 manufactured by NIPPON SEIRO CO., LTD.

Antioxidant 1: NOCRAC 6C (N-(1,3-dimethylbutyl)-N'-phenyl-p-phenylenediamine) manufactured by OUCHI SHINKO CHEMICAL INDUSTRIAL Co., Ltd.

Antioxidant 2: NOCRAC RD (poly(2,2,4-trimethyl-1,2-dihydroquinoline)) manufactured by OUCHI SHINKO CHEMICAL INDUSTRIAL Co., Ltd.

Stearic acid: BEAD STEARIC ACID CAMELLIA manufactured by NOF Corporation.

Zinc oxide: Zinc Oxide Type-1 manufactured by Mitsui Mining & Smelting Co., Ltd.

Sulfur: HK-200-5 (powdery sulfur containing 5% of oil) manufactured by Hosoi Chemical Industry Co., Ltd.

Vulcanization accelerator: NOCCELER NS (N-t-butyl-2-benzothiazole sulfenamide) manufactured by OUCHI SHINKO CHEMICAL INDUSTRIAL Co., Ltd.

[Examples and Comparative Examples]

In accordance with each of blending formulas shown in Table 1, the materials other than the sulfur and the vulcanization accelerator are kneaded under a condition of 150°C for 5 minutes using a 1.7-L Banbury mixer manufactured by Kobe Steel, Ltd., to obtain a kneaded product. Next, the sulfur and the vulcanization accelerator are added to the obtained kneaded product, and the mixture is kneaded under a condition of 80°C for 5 minutes using an open roll to obtain a rubber composition (uncrosslinked product of a rubber composition). The obtained rubber composition is molded into the base layer of a tread and attached together with other parts such as sidewalls to form an unvulcanized tire. The unvulcanized tire is pressed and vulcanized under a condition of 150°C for 12 minutes to manufacture a test tire (size: 275/80R22.5, a tire for trucks and buses) having the basic structure shown in FIG. 1. The tread pattern shown in FIG. 1 is used as the tread pattern of the test tire.

The bottom of each lateral sipe is provided within the base layer in Examples 1 to 3 and Comparative Example 1 and is provided within a cap layer in Comparative Example 2.

[Preparation Before Evaluation]

Buffing is performed on the tread of each test tire. Specifically, the tread is polished until the cap layer disappears and the base layer becomes exposed. Accordingly, a state where lateral sipes having a depth of 0.5 mm remain in the exposed base layer is reproduced. In Comparative Example 2, since the bottom of each lateral sipe is provided within the cap layer, no lateral sipes remain in the exposed base layer.

For each test tire in which a state where the base layer is exposed is reproduced by buffing, the results of calculation based on an evaluation method described below are shown in Table 1.

[Wet Performance (WET)]

Wet performance (wet braking performance) is tested in accordance with R117-02 (ECE Regulation, No. 117, Revision 2) using a test vehicle described below. The test tires in which the late stage of wear is reproduced are attached to all wheels of the test vehicle. For this wet performance, a braking distance for which the test vehicle travels on a wet road surface from the start of braking at a specified initial speed until the test vehicle stops is measured.

Test vehicle: truck with a load capacity of 10 t (2-D vehicle)
Load: 75% of the standard load capacity
Wet road surface: water depth of 0.5 to 2 mm
Speed: 65 km/h
The measured values of Examples 1 to 3 and Comparative Example 2 are represented as indexes with the value of Comparative Example 1 being regarded as 100, using the following formula.

(Wet performance index) = (braking distance of tire of Comparative Example 1)/(braking distance of each test tire) $\times$ 100

The results are shown in the cells for "WET" in Table 1 below. The higher the value is, the better the wet performance is.

[Table 1]

| | Example 1 | Example 2 | Example 3 | Comparative Example 1 | Comparative Example 2 |
|---|---|---|---|---|---|
| Blending formula | | | | | |
| NR | 100 | 100 | 100 | 100 | 100 |
| SBR | - | - | - | - | - |
| BR | - | - | - | - | - |
| CB | 22.5 | 20 | 15 | 26 | 25 |
| Silica | 7.5 | 10 | 15 | 4 | 5 |
| Coupling agent | 0.6 | 0.8 | 1.2 | 0.4 | 0.4 |
| Resin | - | - | - | - | - |
| Oil | - | - | - | - | - |
| Wax | 1.5 | 1.5 | 1.5 | 1.5 | 1.5 |
| Antioxidant 1 | 1 | 1 | 1 | 1 | 1 |
| Antioxidant 2 | 1 | 1 | 1 | 1 | 1 |
| Stearic acid | 3 | 3 | 3 | 3 | 3 |
| Zinc oxide | 3 | 3 | 3 | 3 | 3 |
| Sulfur | 1 | 1 | 1 | 1 | 1 |
| Vulcanization accelerator | 1.5 | 1.5 | 1.5 | 1.5 | 1.5 |
| Sr | 0.25 | 0.33 | 0.50 | 0.13 | 0.17 |
| Ltu | 0.145 | 0.150 | 0.160 | 0.140 | 0.140 |
| Ur | 0.40 | 0.40 | 0.40 | 0.40 | 0.40 |
| DU [mm] | 0.5 | 0.5 | 0.5 | 0.5 | -0.5 |
| TU [mm] | 8.0 | 8.0 | 8.0 | 8.0 | 8.0 |
| Sr×DU/TU | 0.0156 | 0.0208 | 0.0313 | 0.0083 | - |
| LTu×DU/TU | 0.0091 | 0.0094 | 0.0100 | 0.0088 | - |
| WET | 105 | 110 | 120 | 100 | 95 |

The above-described technology capable of exhibiting good wet performance even in a state where a base layer is exposed can be applied to various tires.

[Additional Note]

The present invention includes aspects described below.

[1] A tire including a tread located on a radially outermost side and extending in a circumferential direction, wherein the tread includes a cap layer and a base layer located radially inward of the cap layer, the base layer is formed from a rubber composition containing a rubber component and a filler, the filler includes carbon black and silica, a ratio Sr of a content BSi of the silica per 100 parts by mass of the rubber component to a total of a content BCB of the carbon black per 100 parts by mass of the rubber component and the content BSi of the silica is greater than 0.20, the tread includes a plurality of land portions separated by a circumferential main groove, a ratio Ur of a thickness TU of the base layer to a depth DGm of the circumferential main groove is 0.20 or more and 0.60 or less, at least one of the land portions includes a sipe having a bottom within the base layer, and the ratio Sr, the thickness TU of the base layer, and a depth DU of the sipe in the base layer satisfy the following relational expression,

$$Sr \times DU/TU \geq 0.010.$$

[2] The tire according to [1] above, wherein a loss tangent LTu of the base layer at a temperature of 0°C, the thickness TU of the base layer, and the depth DU of the sipe in the base layer satisfy the following relational expression,

$$LTu \times DU/TU \geq 0.0090.$$

[3] The tire according to [1] or [2] above, wherein the sipe extends in a zigzag manner in a length direction and a depth direction thereof.
[4] The tire according to [1] or [2] above, wherein

the sipe includes a sipe body and a tubular portion located radially inward of the sipe body and having the bottom, and
the tubular portion has a width wider than a width of the sipe body.

[5] The tire according to [4] above, wherein the tubular portion has a maximum width within the base layer.
[6] The tire according to any one of [1] to [5] above, wherein the total of the content BCB of the carbon black per 100 parts by mass of the rubber component and the content BSi of the silica per 100 parts by mass of the rubber component is less than 40 parts by mass.
[7] The tire according to any one of [1] to [6] above, wherein

the rubber component includes a natural rubber, and
a content CNR of the natural rubber in 100 parts by mass of the rubber component is 5 parts by mass or more.

## Claims

**1.** A tire (2) comprising a tread (4) located on a radially outermost side and extending in a circumferential direction, wherein

the tread (4) includes a cap layer (28) and a base layer (30) located radially inward of the cap layer (28),
the base layer (30) is formed from a rubber composition containing a rubber component and a filler,
the filler includes carbon black and silica,
a ratio Sr of a content BSi of the silica per 100 parts by mass of the rubber component to a total of a content BCB of the carbon black per 100 parts by mass of the rubber component and the content BSi of the silica is greater than 0.20,
the tread (4) includes a plurality of land portions (12) separated by a circumferential main groove (10),
a ratio Ur of a thickness TU of the base layer (30) to a depth DGm of the circumferential main groove (10) is 0.20 or more and 0.60 or less,
at least one of the land portions (12) includes a sipe (26) having a bottom (26T) within the base layer (30), and
the ratio Sr, the thickness TU of the base layer (30), and a depth DU of the sipe (26) in the base layer (30) satisfy the following relational expression,

$$Sr \times DU/TU \geq 0.010.$$

**2.** The tire (2) according to claim 1, wherein a loss tangent LTu of the base layer (30) at a temperature of 0°C, the thickness TU of the base layer (30), and the depth DU of the sipe (26) in the base layer (30) satisfy the following relational expression,

$$LTu \times DU/TU \geq 0.0090.$$

**3.** The tire (2) according to claim 1 or 2, wherein the sipe (26) extends in a zigzag manner in a length direction and a depth direction thereof.

**4.** The tire (2) according to claim 1 or 2, wherein

the sipe (26) includes a sipe body (34) and a tubular portion (36) located radially inward of the sipe body (34) and having the bottom (26T), and
the tubular portion (36) has a width wider than a width of the sipe body (34).

5. The tire (2) according to claim 4, wherein the tubular portion (36) has a maximum width (WX) within the base layer (30).

6. The tire (2) according to any one of claims 1 to 5, wherein the total of the content BCB of the carbon black per 100 parts by mass of the rubber component and the content BSi of the silica per 100 parts by mass of the rubber component is less than 40 parts by mass.

7. The tire (2) according to any one of claims 1 to 6, wherein

the rubber component includes a natural rubber, and
a content CNR of the natural rubber in 100 parts by mass of the rubber component is 5 parts by mass or more.

**Fig. 1**

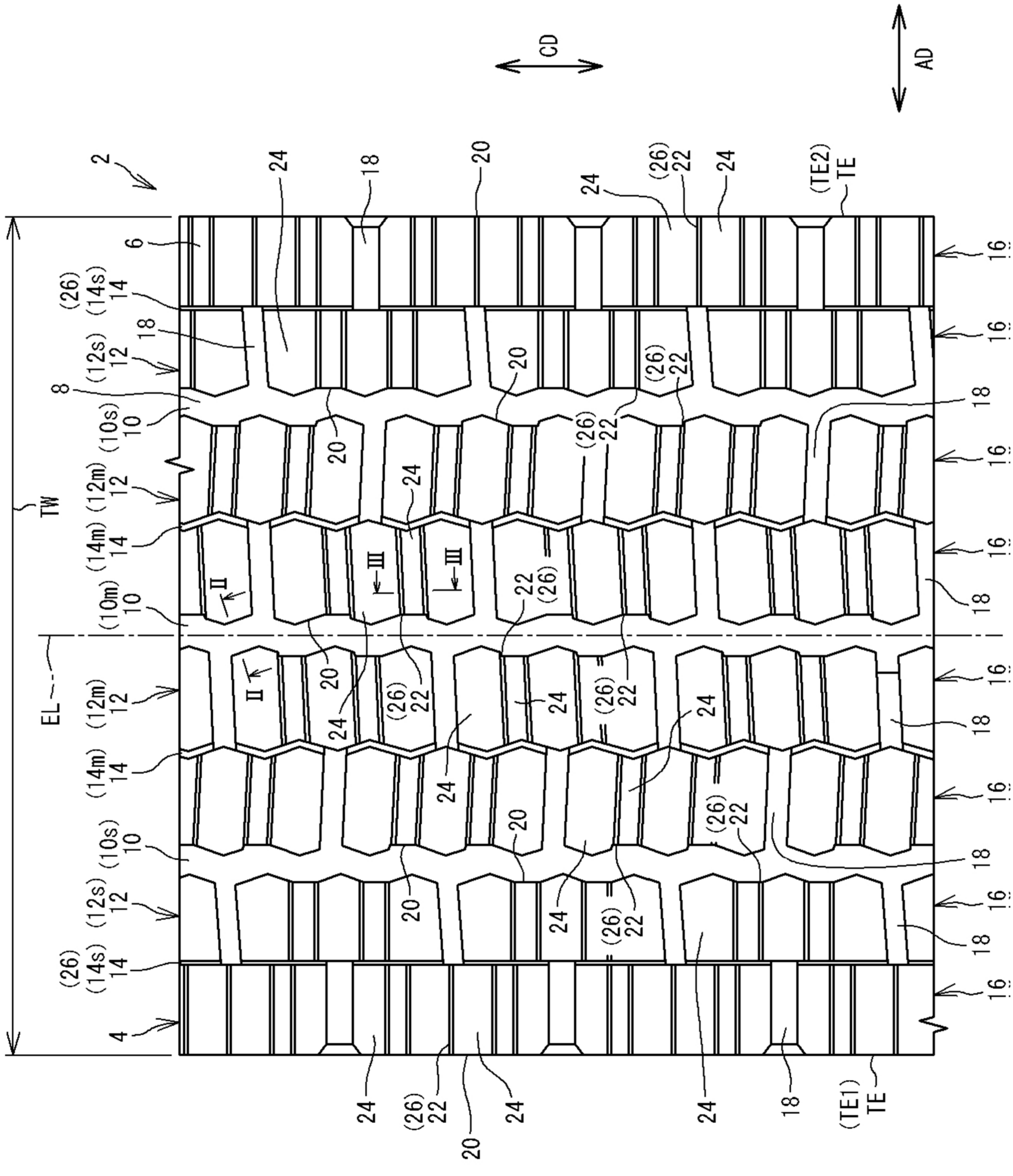
CD
AD
2
TW
EL
TE
(TE1)
(TE2)
4
6
8
10
(10s)
(10m)
12
(12s)
(12m)
14
(14s)
(14m)
16
18
20
22
(26)
24
II
III

**Fig. 2**

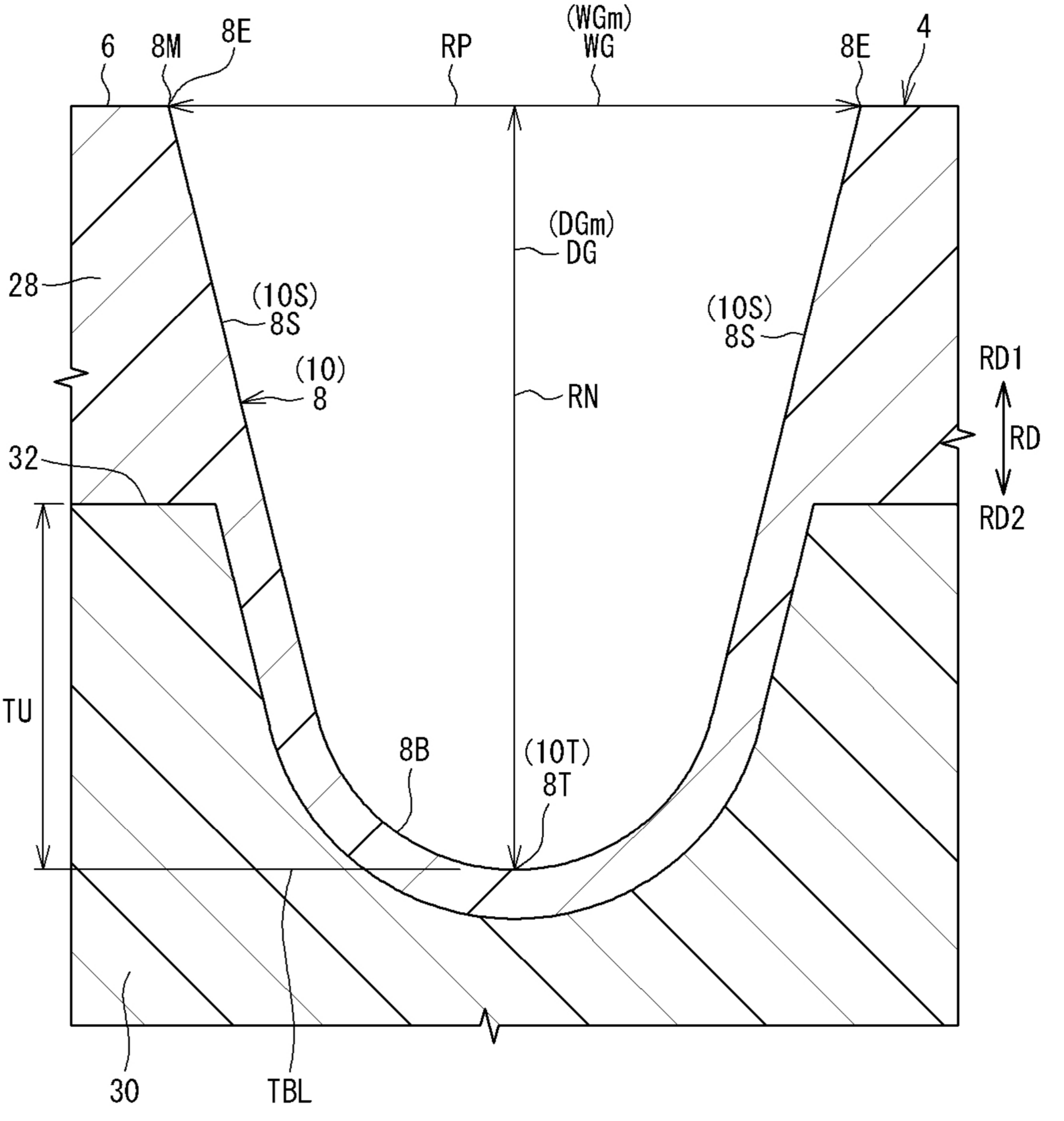
6
8M
8E
RP
(WGm)
WG
8E
4
28
(DGm)
DG
(10S)
8S
(10S)
8S
(10)
8
RN
RD1
RD
RD2
32
TU
8B
(10T)
8T
30
TBL

**Fig. 3**

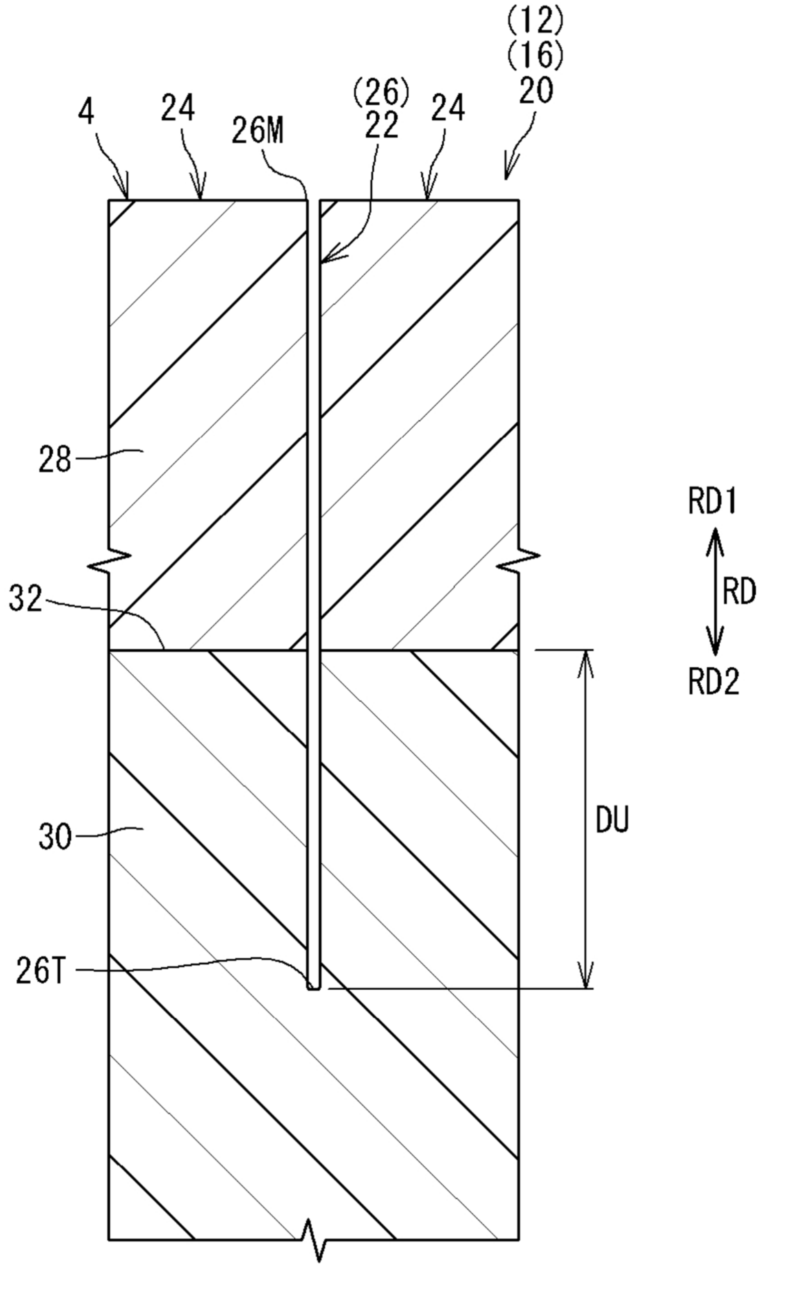

**Fig. 4**

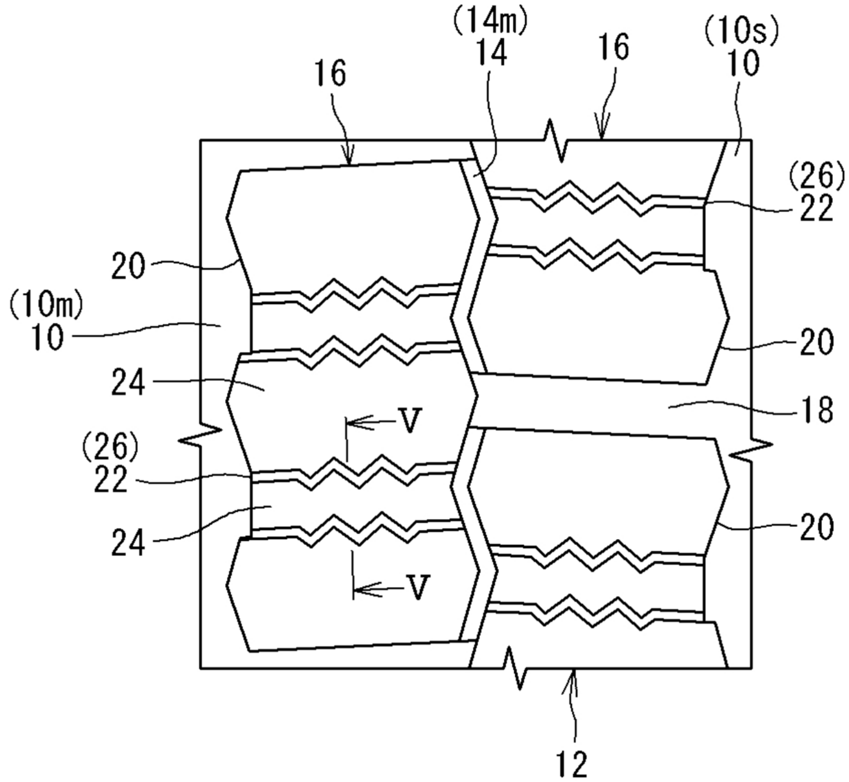

Fig. 5

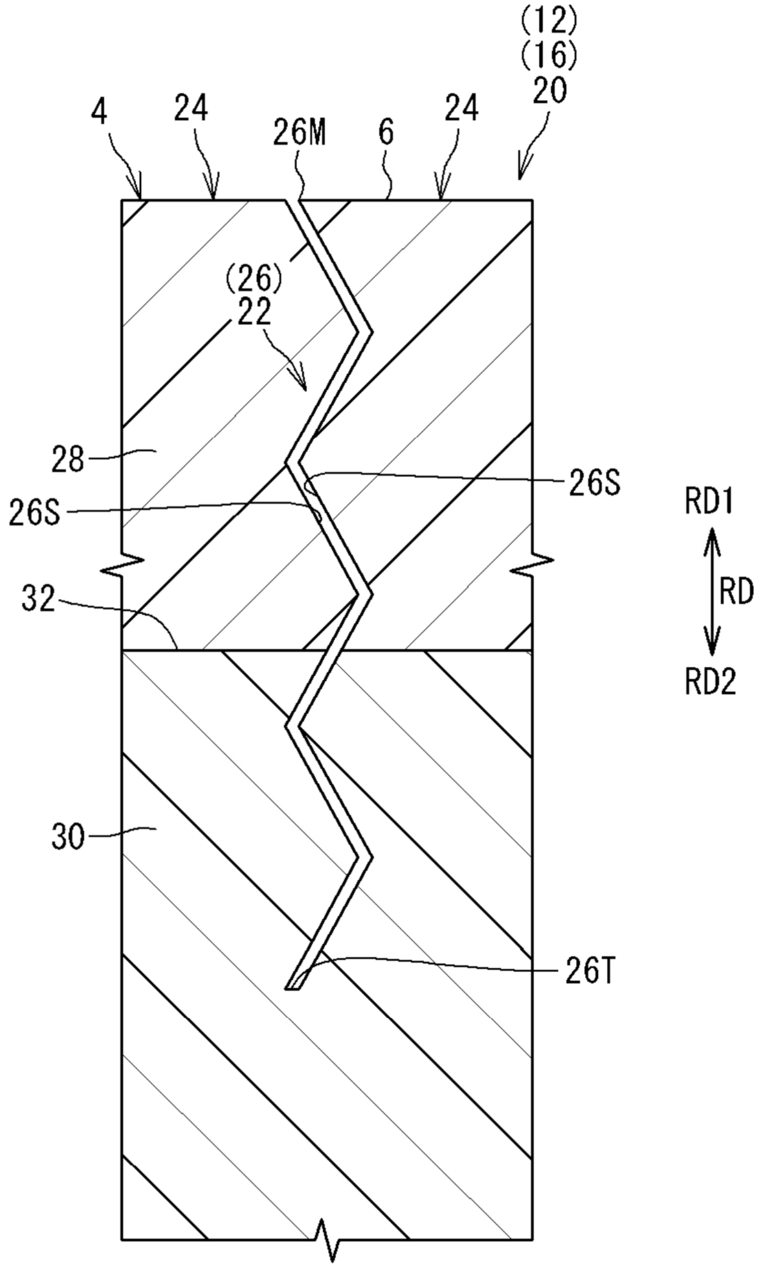

**Fig. 6**

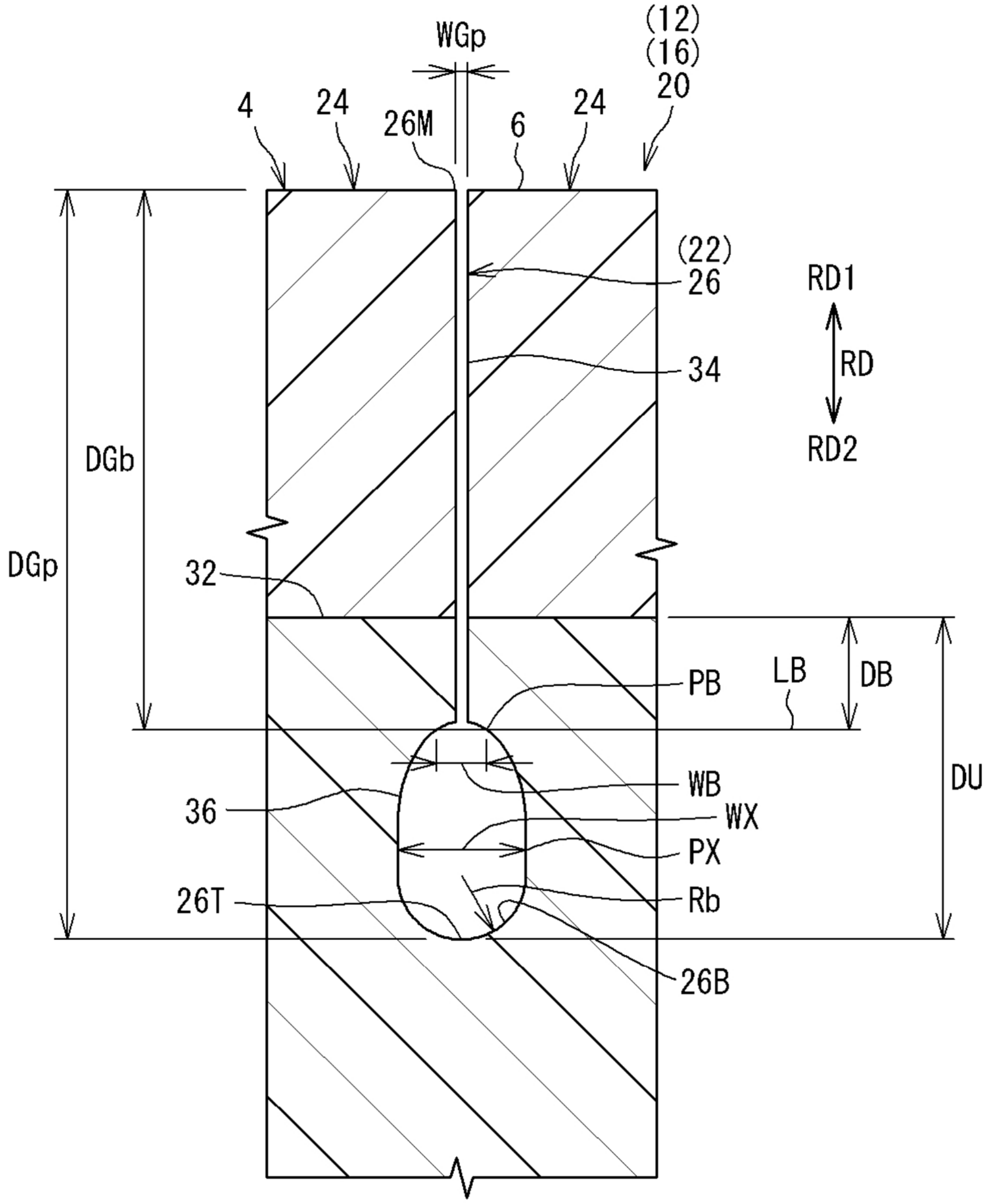
WGp
(12)
(16)
20
4
24
26M
6
24
(22)
26
RD1
34
RD
RD2
DGb
DGp
32
PB
LB
DB
DU
WB
36
WX
PX
26T
Rb
26B

**Fig. 7**

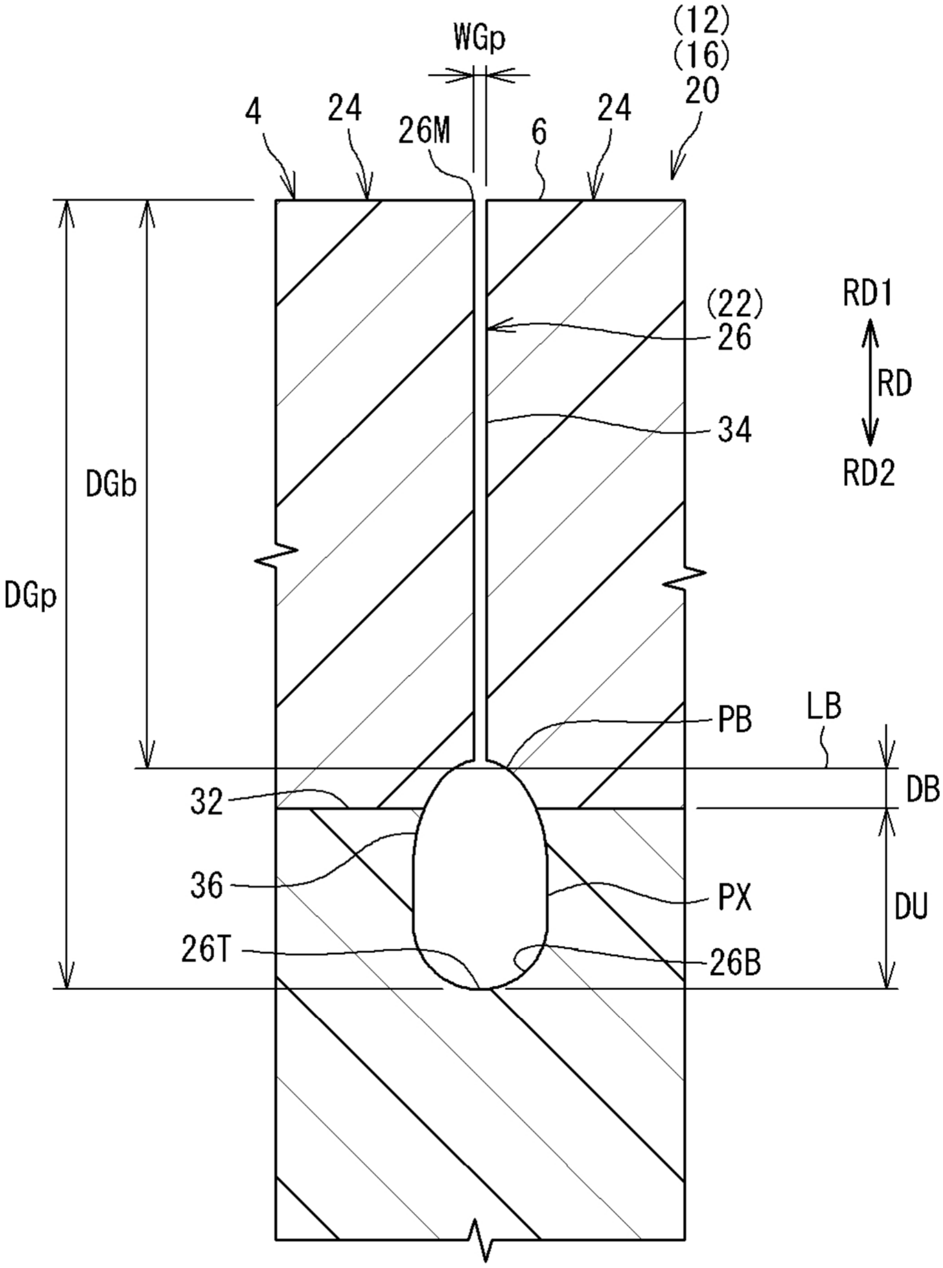
WGp
(12)
(16)
20
4
24
26M
6
24
(22)
26
RD1
RD
RD2
34
DGb
DGp
PB
LB
32
DB
36
PX
DU
26T
26B

**Fig. 8**

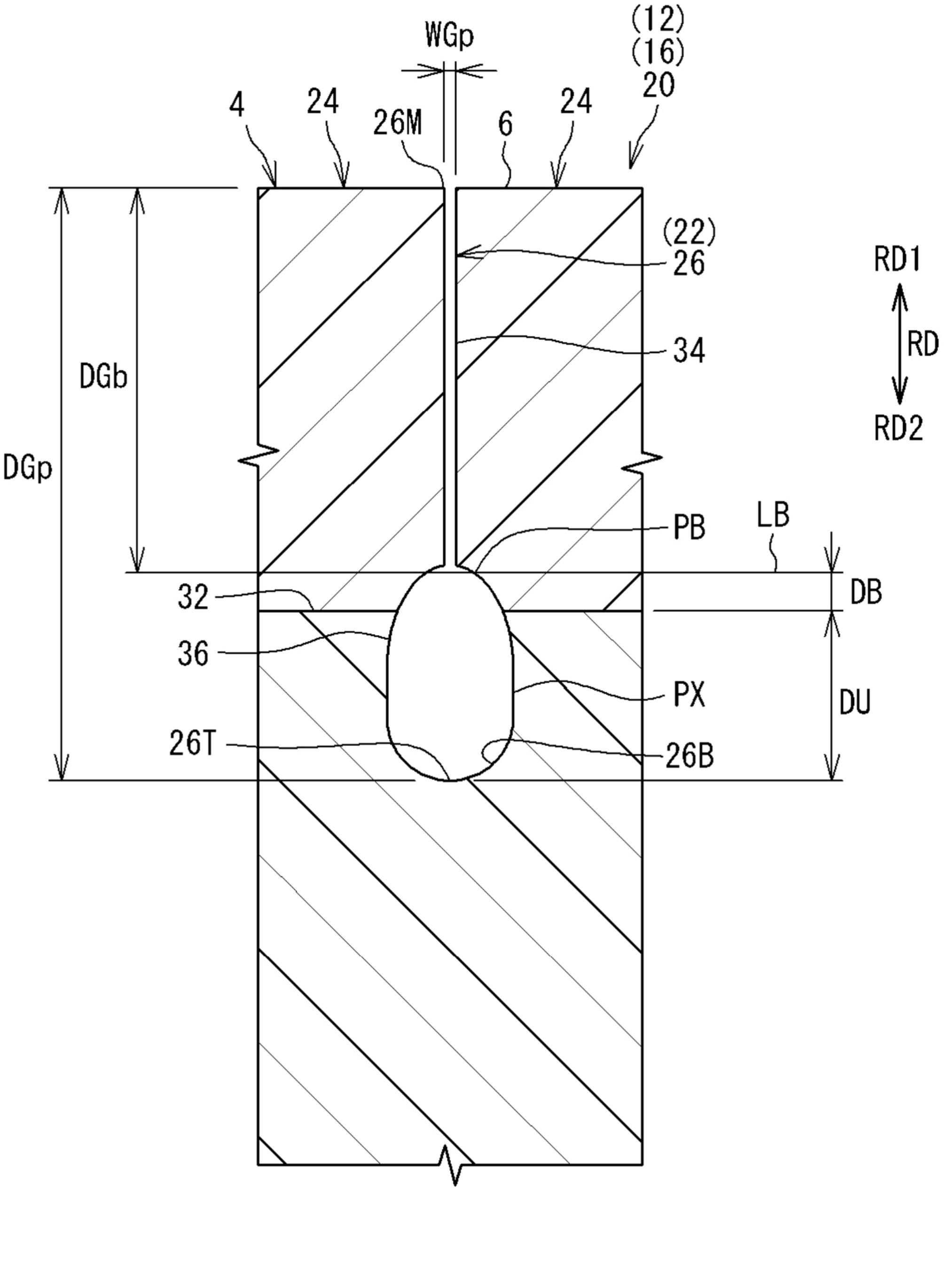
WGp
(12)
(16)
20
4
24
26M
6
24
(22)
26
RD1
RD
RD2
34
DGb
DGp
PB
LB
32
DB
36
PX
DU
26T
26B

**Fig. 9**

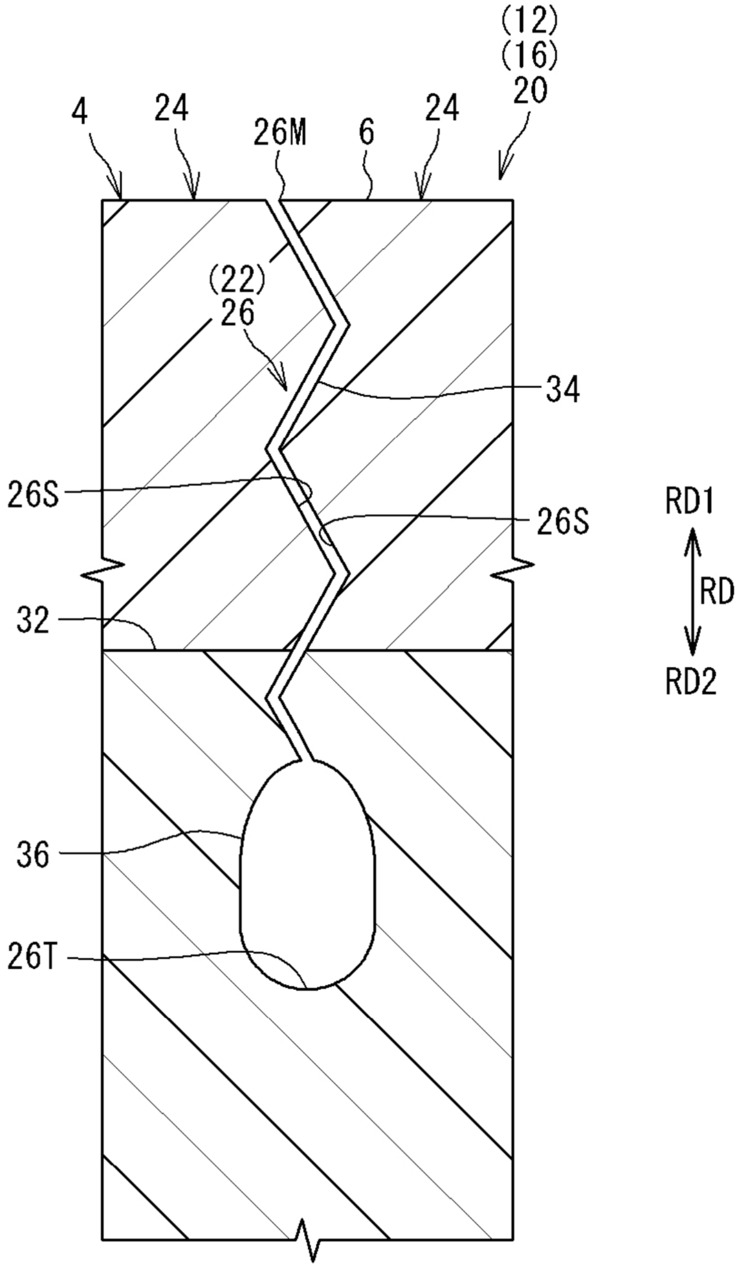

Europäisches Patentamt
European Patent Office
Office européen des brevets

# EUROPEAN SEARCH REPORT

Application Number
EP 25 21 7335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2018/031369 A1 (BRIDGESTONE BANDAG LLC [US]) 15 February 2018 (2018-02-15)<br>* paragraphs [0064], [0098]; figures 1,2 * | 1-5,7<br>6 | INV.<br>B60C1/00<br>B60C11/00<br>B60C11/12<br>C08C19/25<br>C08L7/00<br>B60C11/03 |
| Y | FR 3 135 223 A1 (MICHELIN & CIE [FR]) 10 November 2023 (2023-11-10)<br>* paragraphs [0034], [0037], [0042]; claim 3; figure 1 * | 1-5 | |
| Y | JP 2001 130227 A (BRIDGESTONE CORP) 15 May 2001 (2001-05-15)<br>* paragraphs [0063], [0064]; figures 2,10 * | 1-5 | |
| A | WO 2019/122791 A1 (MICHELIN & CIE [FR]) 27 June 2019 (2019-06-27)<br>* claims 1-11; figure 1 * | 1-6 | |
| | | | TECHNICAL FIELDS SEARCHED (IPC) |
| | | | B60C<br>C08C<br>C08L |

The present search report has been drawn up for all claims

1

| Place of search | Date of completion of the search | Examiner |
|---|---|---|
| Munich | 23 March 2026 | Brito, Fernando |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 21 7335

This annex lists the patent family members relating to the patent documents cited in the above-mentioned European search report. The members are as contained in the European Patent Office EDP file on
The European Patent Office is in no way liable for these particulars which are merely given for the purpose of information.

23-03-2026

| Patent document cited in search report | Publication date | Patent family member(s) | Publication date |
|---|---|---|---|
| WO 2018031369 A1 | 15-02-2018 | BR 112019002242 A2 | 14-05-2019 |
| | | CN 109715412 A | 03-05-2019 |
| | | EP 3496957 A1 | 19-06-2019 |
| | | JP 2019528207 A | 10-10-2019 |
| | | US 2019344624 A1 | 14-11-2019 |
| | | WO 2018031369 A1 | 15-02-2018 |
| FR 3135223 A1 | 10-11-2023 | CN 119136995 A | 13-12-2024 |
| | | FR 3135223 A1 | 10-11-2023 |
| | | US 2025303798 A1 | 02-10-2025 |
| | | WO 2023217622 A1 | 16-11-2023 |
| JP 2001130227 A | 15-05-2001 | JP 4327962 B2 | 09-09-2009 |
| | | JP 2001130227 A | 15-05-2001 |
| WO 2019122791 A1 | 27-06-2019 | CN 111511582 A | 07-08-2020 |
| | | EP 3727894 A1 | 28-10-2020 |
| | | US 2021146728 A1 | 20-05-2021 |
| | | WO 2019122791 A1 | 27-06-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003127614 A
- EP 3427975 A
- JP 6856781 B
- EP 3173251 A
- JP 2009002594 A


### Non-patent literature cited in the description


- *Rubber Chemistry and Technology*, 2012, vol. 85 (3), 408-449
- Comparison of surface morphology and chemistry between pyrolytic carbon black and commercially available carbon black. *Powder Technology*, 2005, vol. 160, 190-193
- *Akita Prefectural University Web Journal B*, 2019, vol. 6, 216-222